# EUROPÄISCHE PATENTSCHRIFT

(11) **EP 2 516 993 B1**
(45) Veröffentlichungstag und Bekanntmachung des Hinweises auf die Patenterteilung: **19.02.2025**
(21) Anmeldenummer: 10795617.9
(22) Anmeldetag: 14.12.2010
(51) Int. Cl.: G01N 21/64

(54) **HOCHAUFLÖSENDES MIKROSKOP UND VERFAHREN ZUR ZWEI- ODER DREIDIMENSIONALEN POSITIONSBESTIMMUNG VON OBJEKTEN**
HIGH-RESOLUTION MICROSCOPE AND METHOD FOR DETERMINING THE TWO- OR THREE-DIMENSIONAL POSITIONS OF OBJECTS
MICROSCOPE HAUTE À RÉSOLUTION ET PROCÉDÉ DE DÉTERMINATION DE LA POSITION BI- OU TRIDIMENSIONNELLE D'OBJETS

(30) Priorität: 22.12.2009 DE 102009060793
(43) Veröffentlichungstag der Anmeldung: 31.10.2012
(73) Patentinhaber: Carl Zeiss Microscopy GmbH, 07745 Jena (DE)
(72) Erfinder: KALKBRENNER, Thomas, 07745 Jena (DE); WOLLESCHENSKY, Ralf, 07745 Jena (DE)
(74) Vertreter: Meyer, Jork
(86) Internationale Anmeldenummer: PCT/EP2010/007595
(87) Internationale Veröffentlichungsnummer: WO 2011/085766

(56) Entgegenhaltungen:
- WO-A1-2009/146016
- DE-A1- 2 834 204
- US-A1- 2005 036 667
- JONAS FÖLLING ET AL: "Fluorescence Nanoscopy with Optical Sectioning by Two-Photon Induced Molecular Switching using Continuous-Wave Lasers", CHEMPHYSCHEM, vol. 9, no. 2, 1 February 2008 (2008-02-01), DE, pages 321 - 326, XP055329929, ISSN: 1439-4235, DOI: 10.1002/cphc.200700655
- SHROFF H ET AL: "Dual-color superresolution imaging of genetically expressed probes within individual adhesion complexes", PROCEEDINGS OF THE NATIONAL ACADEMY OF SCIENCES, NATIONAL ACADEMY OF SCIENCES, vol. 104, no. 51, 18 December 2007 (2007-12-18), pages 20308 - 20313, XP002540127, ISSN: 0027-8424, DOI: 10.1073/PNAS.0710517105
- HUANG B ET AL: "Three-Dimensional Super-Resolution Imaging by Stochastic Optical Reconstruction Microscopy", SCIENCE, AMERICAN ASSOCIATION FOR THE ADVANCEMENT OF SCIENCE, WASHINGTON, DC; US, vol. 319, 8 February 2008 (2008-02-08), pages 810 - 813, XP002523347, ISSN: 0036-8075, [retrieved on 20080103], DOI: 10.1126/SCIENCE.1153529
- HESS S T ET AL: "Ultra-High Resolution Imaging by Fluorescence Photoactivation Localization Microscopy", BIOPHYSICAL JOURNAL, BIOPHYSICAL SOCIETY, US, vol. 91, no. 11, 1 December 2006 (2006-12-01), pages 4258 - 4272, XP002523343, ISSN: 0006-3495, [retrieved on 20081108], DOI: 10.1529/BIOPHYSJ.106.091116
- ALIPASHA VAZIRI, JIANYONG TANG, HARI SHROFF AND CHARLES V. SHANK: "MULTILAYER THREE-DIMENSIONAL SUPER RESOLUTION IMAGING OF THICK BIOLOGICAL SAMPLES", PNAS, vol. 105, no. 51, 23 December 2008 (2008-12-23), pages 20221 - 20226, XP002633265, DOI: 10.1073/pnas.0810636105
- TOPRAK E ET AL: "Three-Dimensional Particle Tracking via Bifocal Imaging", NANO LETTERS, ACS, WASHINGTON, DC, US, vol. 7, no. 7, 11 July 2007 (2007-07-11), pages 2043 - 2045, XP002523345, ISSN: 1530-6984, [retrieved on 20070621], DOI: 10.1021/NL0709120
- RAM S ET AL: "High accuracy 3D quantum dot tracking with multifocal plane microscopy for the study of fast intracellular dynamics in live cells", BIOPHYSICAL JOURNAL BIOPHYSICAL SOCIETY USA, vol. 95, no. 12, 15 December 2008 (2008-12-15), pages 6025 - 6043, XP002633266, ISSN: 0006-3495
- JUNICHIRO YAJIMA, KANA MIZUTANI, TAKAYUKI NISHIZAKA: "A torque component present in mitotic kinesin Eg5 revealed by three-dimensional tracking", NATURE STRUCTURAL & MOLECULAR BIOLOGY, vol. 15, no. 10, 21 October 2008 (2008-10-21), pages 1119 - 1121, XP002633267

## Beschreibung

### Problembeschreibung (Stand der Technik)

Prinzipiell ist die optische Auflösung eines Lichtmikroskopes, auch die eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung, gegenüber einem klassischen LSM deutlich verbessert werden.

Mit Hilfe nicht-linearer Entvölkerungsprozesse kann weiter die Auflösung gegenüber einem beugungsbegrenzten konfokalen LSM angehoben werden. Ein solches Verfahren ist beispielsweise in der US 5,866,911 A beschrieben. Für die Entvölkerungsprozesse sind verschiedene Ansätze bekannt, beispielsweise wie in der DE 44 16 558 C2, US 6,633,432 B2 oder DE 103 25 460 A1 beschrieben.

In den letzten Jahren werden verschiedene Verfahren zur Überwindung der Beugungsgrenze in der Fluoreszenzmikroskopie entwickelt und angewendet (PALM Strukturierte Beleuchtung WO 2006/127692 A2; EP 1 157 297 B1). Das Dokument HUANG B ET AL: "Three-Dimensional Super-Resolution Imaging by Stochastic Optical Reconstruction Microscopy" (SCIENCE, Bd. 319, 8. Februar 2008 (2008-02-08), Seiten 810-813) zeigt ein Mikroskop für das STORM-Verfahren.

Eine sich derzeit besonders vorteilhaft entwickelnde Methode zur hochauflösenden Fluoreszenzmikroskopie basiert auf der hochgenauen Lokalisierung einzelner Moleküle. Es ist bekannt, dass die Lokalisierung, also die Bestimmung des Ortes eines einzelnen fluoreszierenden Moleküls, nicht der Beugungsbeschränkung unterliegt.

Diese Ortsbestimmung kann mit hochempfindlichen Kameras im Weitfeld mit einer Genauigkeit bis in den nm-Bereich erfolgen, wenn genügend Photonen des Moleküls detektiert werden können. Bei der lokalisierungsbasierten, hochaufgelösten Mikroskopie wird aus den so gewonnenen Molekülpositionen ein Bild zusammengesetzt. Entscheidend dabei ist, dass sich immer nur eine Untermenge der Moleküle der Probe im fluoreszierenden Zustand befindet, so dass im Mittel die "Nächste-Nachbar" Distanz der aktiven Moleküle immer größer als die PSF (Point Spread Funktion) des Mikroskops ist. Erreicht wird dies durch Verwendung optisch oder chemisch schaltbarer Fluorophore: in einem dicht markierten Bereich einer Probe werden durch Einstrahlen einer geeigneten Konversionswellenlänge stochastische Untermengen der Fluorophore im betrachteten Bereich in den fluoreszierenden Zustand geschaltet. Dabei wird die Dichte der Spots so eingestellt, dass ein kontinuierliches Lokalisieren der Molekülpositionen ermöglicht wird. Dieses optische Schaltverfahren wird z.B. bei der PhotoActivated Localization Microscopy (PALM) verwendet. Dieses grundlegende Verfahren ist in verschiedenen Variationen eingehend in der Literatur beschrieben [1-6].

Die hochauflösenden Verfahren (PALM, STORM, D-STORM etc.) unterscheiden sich dabei hauptsächlich in der Wahl der Fluorophore und der Art des optischen Schaltprozesses.

Allen Verfahren gemeinsam ist jedoch die Lokalisierung der Moleküle durch Abbildung auf eine hochempfindliche (z.B. EMCCD) Kamera. Die quasi-punktförmige Lichtquelle (Molekül) wird dabei durch die Punktbildverwaschungsfunktion (PSF) des Mikroskops auf mehrere Kamerapixel abgebildet. Die genaue Position des Moleküls in der x/y Ebene kann nun entweder durch fitten der bekannten PSF (Gauss) oder durch Schwerpunktsbestimmung oder durch eine Mischung von beidem (Gaussian Mask) bestimmt werden.

Typische Lokalisierungsgenauigkeiten liegen (je nach experimentellen Bedingungen) bei 5-30nm; das ist dann in etwa auch die laterale Auflösung dieses Verfahrens.

Praktisch bedeutet die Forderung nach nicht zu dicht beieinander liegenden Molekülen einerseits und einer möglichst kompletten Wiedergabe der untersuchten Strukturen andererseits, dass viele Einzelbilder (typisch 10000-20000) der Probe aufgenommen werden müssen.

Das führt zu einer beträchtlichen Bildaufnahmezeit sowie zu Problemen bei der Einstellung der Schaltintensität, insbesondere dann, wenn die Probe bzw. die interessanten Strukturen sehr inhomogen markiert sind: um nicht Information zu verlieren, muss die Schaltintensität immer auf die am dichtesten markierten Bereiche der Probe angepasst werden.

Grundsätzlich ist das oben beschriebene Verfahren der lokalisierungsbasierten Hochauflösung auf Oberflächen bzw. 2 Dimensionen beschränkt, da die Lokalisierung der einzelnen Farbstoff-Moleküle in der dritten Raumrichtung (z-Richtung) ungleich komplexer ist. Die Anzahl der aufzunehmenden Einzelmoleküle für die Wiedergabe der Strukturen erhöht sich im dreidimensionalen Fall entsprechend.

Ein weiteres Problem für die dreidimensionale hochaufgelöste Abbildung in der Tiefe einer Probe liegt in der begrenzten Eindringtiefe: wie auch aus der klassischen Fluoreszenzmikroskopie und Laser-Scanning Mikroskopie bekannt, führt die zunehmende Streuung der Anregungsstrahlung in der Tiefe der Probe zu einer Erhöhung des Hintergrundsignals bei gleichzeitiger Verringerung des eigentlichen Nutzsignals.

Zusätzlich zum unerwünschtem Photobleichen von Probenbereichen außerhalb der Fokalebene kommt beim PALM-Verfahren in der Tiefe der Probe auch noch das unerwünschte Schalten der Fluorophore durch die Aktivierungsstrahlung in den nicht aktuell vermessenen Schichten hinzu.

Es besteht im Stand der Technik das generelle Erfordernis einer in drei Dimensionen hochaufgelösten Fluoreszenzabbildung mit hoher Eindringtiefe und "sectioning" (also vermessen einer Schicht bei Vermeidung von Anregung/Bleichen und insbesondere Schalten der photokonvertierbaren Fluorophore in darüber oder darunter liegenden Schichten) und einer Erhöhung der Aufnahmegeschwindigkeit.

### Zusammenfassung der Erfindung

Die Erfindung ist in den unabhängigen Ansprüchen 1 und 2 angegeben.

Erfindungsgemäß wurde erkannt, dass sich ein dreidimensional auflösungsgesteigertes Mikroskop durch Synergien der folgenden Technologien und Anordnungen in den nachstehend näher beschriebenen Anordnungen und Verfahren realisieren lässt:

### Hochauflösende Bestimmung der axialen (Z-) Position von Molekülen:

### Astigmatismus/Zylinderlinse ([9])

Bei diesem Ansatz wird im Detektionsstrahlengang eine schwache Zylinderlinse eingebracht, die zu einer astigmatischen PSF führt. Entsprechend wird das Bild des Moleküls elliptisch verzerrt, wenn sich das Molekül ober- oder unterhalb des Symmetriepunktes der PSF befindet. Aus Orientierung und Stärke der Verzerrung lässt sich dann die Information über die z-Position des Moleküls extrahieren.

Die anamorphotische Optik (Zylinderlinse) wird erfindungsgemäß vorteilhaft zur Bestimmung der vertikalen Molekülposition durch Form- und/ oder Größenerfassung eingesetzt und mit den folgenden Verfahren und Anordnungen in einem Mikroskop realisiert.

### Detektion in zwei Ebenen (Biplane Detektion)(Toprak et al., Bewersdorf et al.[7,8])

Hier wird ein 50/50 Strahlteiler im Detektionsstrahlengang eingeführt, der das Bild in zwei Teilbilder aufspaltet (dupliziert). Diese zwei Bilder werden entweder auf zwei identische Kameras oder nebeneinander auf einen Kamerachip abgebildet. In einen der zwei Teilstrahlengänge wird eine optische Weglängendifferenz dergestalt eingeführt, dass sich aus den zwei Teilstrahlengängen zwei Objektebenen ergeben, die um etwa eine halbe bis eine z-PSF (700 nm) in z-Richtung auseinander liegen. Die z-Position für Moleküle, die zwischen diesen beiden Ebenen liegen, ergibt sich nun z.B. durch Subtraktion der zwei Teilbilder des Moleküls bzw. durch fitten einer dreidimensionalen PSF oder vergleichbare Algorithmen.

Eine Aufspaltung des Detektionsstrahlengangs und versetzte Detektion der aufgespalteten Strahlengänge, die einen Weglängenunterschied aufweisen sowie die farbselektive Verwendung für mehrere Fluorophore in mehreren Detektionsstrahlengängen werden mit den übrigen erfindungsgemäßen Verfahren und Anordnungen in einem Mikroskop realisiert.

### Eindringtiefe: Multiphotonen-Mikroskopie

Der Stand der Technik der Multiphotonen-Mikroskopie, insbesondere 2-Photonen (2P)- Anregung und deren Vorteile werden gezielt mit den weiteren beschriebenen erfindungsgemäßen Verfahren und Anordnungen eingesetzt.

### Das 2P-Schalten konvertierbarer Farbstoffe

Die Möglichkeit der 2P-Anregung besteht nicht nur für die typischen Fluoreszenzanregungen bekannter Farbstoffe, sondern prinzipiell auch für die Schaltübergänge sogenannter schaltbarer Fluorophore oder Photoschalter. Dabei handelt es sich um Fluorophore, die durch Einstrahlen einer Schaltwellenlänge je nach Ausgangszustand in einen fluoreszierenden oder nichtfluoreszierenden Zustand versetzt werden können (vgl. PALM, STORM etc). Dabei kann die Schaltwellenlänge auch gleich der Anregungswellenlänge sein. Solche Photoschalter sind essentiell für die oben genannten Hochauflösungsverfahren.

In verschieden Publikationen [10] wurde berichtet, dass manche schaltbaren Fluorophore auch mit einer 2-Photonen-Anregung geschaltet werden können, z.B. die Proteine Dronpa, EosFP, Kaede, Kikume, PA-GFP (Referenzen 2P-Schalten).

Die 2P-Aktivierung (Schalten in einen aktivierbaren Zustand) wird insbesondere im Punktscanningmode, aber auch im Linienscanningmode, vorzugsweise jeweils mit Weitfeldfluoreszenzanregung und Weitfelddetektion, einzeln oder mit den weiteren beschriebenen erfindungsgemäßen Anordnungen und Verfahren eingesetzt.

Besonders vorteilhaft wirken sie in Verbindung mit der Markierung vorbestimmter Regionen (ROI), die beispielsweise in einem Vorausbild erfasst und markiert werden, wie bestimmte Zellen oder andere interessante biologische Gebiete, insbesondere durch:
AOTF Steuerung, SLM Steuerung oder DMD Steuerung der Beaufschlagung mit Schaltstrahlung und/ oder Anregungsstrahlung.

Dies zweidimensional und dreidimensional (im Bildstapel), auch in Verbindung mit den anderen aufgeführten erfindungsgemäßen Verfahren und Anordnungen in einem Mikroskop.

### Zeitliche Fokussierung der Schaltstrahlung

Mit der sogenannten zeitlichen Fokussierung (temporal focussing) kann der Effekt der Tiefendiskriminierung, der bei der punktscannenden 2P-Mikroskopie durch die quadratische Intensitätsabhängigkeit der Anregung in Kombination mit starker Fokussierung entsteht, auch in einer Weitfeldabbildung erreicht werden. Dazu werden z.B. in [11] kurze Laserpulse über ein Gitter spektral aufgespaltet; dieses Gitter wird dann über das Mikroskopobjektiv abgebildet. Das hat zur Folge, dass die unterschiedlichen Spektralkomponenten der Pulse unterschiedliche optische Wege nehmen und erst in der Fokalebene wieder zusammentreffen, um dann dort den ursprünglichen kurzen Laserpuls zu bilden. Damit ist die Spitzenleistung des Pulses nur in der Fokalebene maximal, was im Zusammenhang mit der o.g. quadratischen Intensitätsabhängigkeit der 2P-Anregung zu einer Tiefendiskriminierung führt, nun aber im Weitfeld.

Dies kann durch SLM oder DMD Ansteuerung mit der ROI Funktion wie oben erwähnt verbunden werden.

### 2P-Multispot imaging

Mit gerastertem Mikrolinsenarray oder drehender Mikrolinsen-Scheibe, z.B. in [14] und Referenzen darin, wird mit den anderen aufgeführten Verfahren und Anordnungen in einem Mikroskop realisiert.

### Schalten und Anregung über einen Linienscanner

Wird mit den anderen aufgeführten Verfahren und Anordnungen in einem Mikroskop realisiert.

Der bisherige Stand der Technik konnte im Gegensatz zu den nachstehend beschriebenen Anordnungen und Verfahren die erfindungsgemäßen Synergien und Vorteile bisher nicht erreichen:
- PALM und die verwandten Verfahren liefern eine zweidimensional -hochaufgelöste Fluoreszenzabbildung, aber nur an der Deckglas-Grenzfläche unter TIRF-Anregung.
- Mit Bi-Plane oder Astigmatismus-Ansätzen kann zusätzlich die z-Auflösung gesteigert werden; das Vermessen dicker Proben wird aber insbesondere dadurch problematisch, dass nur Schichten von der Größenordnung einer PSF vermessen werden können. Schichten darüber oder darunter können zwar wie in der Mikroskopie üblich als Bildstapel sequenziell vermessen werden; da es sich aber um (Laser) Weitfeld-Anregung und -Schalten handelt, werden die Schichten ober- und unterhalb schon während der Vermessung der aktuellen Schicht ebenfalls geschaltet und/oder gebleicht, und können daher nicht oder nur noch eingeschränkt vermessen werden.
- Temporal focussing zum Schalten der Fluorophore [12] wurde demonstriert und ein 2P vergleichbares sectioning beobachtet. Allerdings kann damit keine echte 3D-Hochauflösung erreicht werden.
- 2P-Schalten durch einen punktgescannten cw-Laser in Verbindung mit Weitfeld-Detektion wurde demonstriert [13]. Auch hier ist zwar sectioning, aber keine 3D-Auflösung möglich.
- Bei allen lokalisierungsbasierten Hochauflösungsverfahren, die auf Photoschaltern basieren, muss derzeit die Intensität des Schaltlasers pro Bild an die höchste Markierungsdichte innerhalb des beobachteten Probenbereichs angepasst werden.

### Literatur:

[1] Betzig et. al., Sciene 313, 1642-1645 (2006)
[2] Hess et al., PNAS 104, 17370-17375 (2007)
[3] Hess et al., Biophys J. 91,4258-427 (2006)
[4] Shroff et al., PNAS 104, 20308-2031(2007)
[5] Rust et al., Nat Methods 3, 793-796 (2006)
[6] Egner et al., Biophys J. 93, 3285-3290 (2007)
[7] Toprak et al., Nano Lett. 7, 3285-3290 (2007)
[8] Juette et al., Nature Methods 5, 527 (2008)
[9] Huang et al., Science 319, 810 (2008)
[10] Marriot et al., PNAS 2008, Ivanchenko et al. BioPhysJ 2007, Watanabe et al. OptExp. 2007, Schneider et al., BioPhysJ 2007
[11] Oron et al., Optics Express 13, 1468 (2005)
[12] Vaziri et al., PNAS 105, 20221 (2008)
[13] Fölling et al., ChemPhysChem 9, 321 (2008)
[14] Pawley, Handbook of Biological Confocal Microscopy (3rd Edition)

DE 19829981A1 : Regions of Interest
DE 19930532A1 : SLM
DE 10259443 A1 : Pulsvereinigung in der Probe
DE 19835072A1 : DMD
US 5867604 : Strukturierte Beleuchtung

Die Erfindung wird weiterhin durch die Merkmale der unabhängigen Ansprüche charakterisiert.

Sie wird in einem hochauflösendes Mikroskop und Verfahren realisiert, zur zwei - oder dreidimensionalen Positionsbestimmung von Objekten, insbesondere einzelner Fluorophore, vorzugsweise zur räumlich hochauflösenden Fluoreszenzmikroskopie einer Probe, die mit Markierungsmolekülen markiert ist, welche mit einem Signal derart aktivierbar oder umschaltbar sind, dass sie erst im aktivierten oder umgeschalteten Zustand zur Abgabe von Fluoreszenzstrahlung anregbar sind, wobei das Verfahren folgende Schritte aufweist:
1) Einbringen des Signals auf die Probe derart, dass nur eine Teilmenge der in der Probe vorhandenen Markierungsmoleküle aktiviert werden, wobei in der Probe Teilbereiche bestehen, in denen aktivierte Markierungsmoleküle zu den ihnen nächst benachbarten aktivierten Markierungsmoleküle mindestens einen Abstand haben, der größer oder gleich einer Länge ist, welche sich aus einer vorbestimmten optischen Auflösung ergibt,
2) Anregung der aktivierten Moleküle zur Abgabe von Fluoreszenzstrahlung,
3) Detektion der Fluoreszenzstrahlung mit der vorbestimmten optischen Auflösung, und
4) Erzeugen eines Einzelbildes aus der in Schritt 3) aufgenommenen Lumineszenzstrahlung,

wobei die geometrischen Orte der Fluoreszenzstrahlung abgebenden Markierungsmoleküle mit einer über die vorbestimmte optische Auflösung gesteigerten Ortsauflösung ermittelt werden,
wobei die Schritte mehrfach wiederholt werden und die so erhaltenen, mehreren Einzelbilder zu einem Gesamtbild zusammengefügt werden.

In dem erfindungsgemäßen Verfahren erfolgt ein selektives Aktivieren oder Umschalten von Probenregionen. Im Zuge des erfindungsgemäßen Verfahrens wird eine Mehrebenendetektion in Z-Richtung durchgeführt, bei der entweder eine astigmatische Punktbildverwaschungsfunktion erzeugt wird oder Teilbilder mit einem räumlichen Versatz in einer Detektionsebene erzeugt werden. Das erfindungsgemäße hochauflösende Mikroskop ist in bestimmten Ausführungsformen zudem für eine konfokale Tiefendiskriminierung bei einer Weitfeldbeleuchtung einsetzbar. feldbeleuchtung einsetzbar.

Der Hintergrund der Erfindung wird nachstehend anhand der schematischen Zeichnungen näher erläutert.

Es zeigen zunächst:
- Fig. 1: eine Schemadarstellung eines aktivierten Markierungsmoleküls in einem auflösungsbegrenzten Volumen,
- Fig. 2: eine Schemadarstellung der Abbildung verschiedener aktivierter und nicht-aktivierter Markierungsmoleküle auf einen ortsauflösenden Detektor,
- Fig. 3: ein Ablaufdiagramm für die Bilderzeugung im PALM-Verfahren,
- Fig. 4: zum Ablaufdiagramm der Fig. 3 gehörende Erläuterungsdarstellungen von auf den Detektor der Fig. 2 abgebildeten Markierungsmolekülen,
- Fig. 5: eine Schemadarstellung eines Mikroskop zur PAL-Mikroskopie (Stand der Technik).

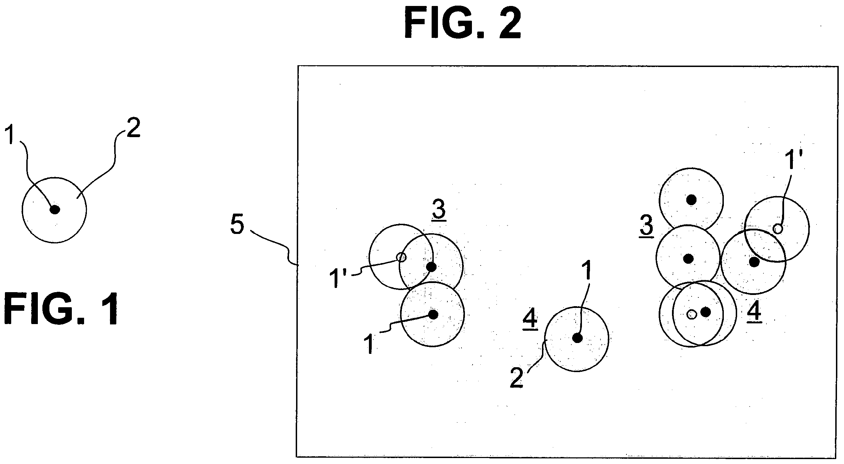

Fig. 1 zeigt schematisch ein Markierungsmolekül 1, das zur Fluoreszenz angeregt wurde. Natürlich erfordert die Fluoreszenzdetektion eine Vielzahl von Anregungen, da jede Anregung genau ein Fluoreszenzphoton liefert und die Strahlungsdetektion eine Integration vieler Fluoreszenzphotonen benötigt. Die vom Markierungsmolekül 1 abgegebene Fluoreszenzstrahlung kann in einem Mikroskop aufgrund physikalischer Prinzipien lediglich mit einer begrenzten optischen Auflösung detektiert werden. Selbst wenn das Mikroskop die Beugungsgrenze der optischen Auflösung erreicht, werden die Photonen des fluoreszierenden Markierungsmolekül 1 immer noch beugungsbedingt gestreut und somit in einen Beugungsscheibchen 2 detektiert. Das Mikroskop gibt also prinzipiell statt der geometrischen Ausdehnung des Markierungsmoleküls 1, die in Fig. 1 schematisch als schwarzer Kreis gezeichnet ist, ein größeres Objekt wieder, das in Fig. 1 durch das Beugungsscheibchen 2 veranschaulicht ist. Die Größe des Beugungsscheibchens 2 hängt von der Güte der verwendeten Mikroskopieeinrichtung ab und ist durch die Halbwertsbreite der Punktverwaschungsfunktion der optischen Abbildung definiert. Tatsächlich handelt es sich natürlich nicht um ein zweidimensionales Objekt, sondern um ein Beugungsvolumen, in das die Fluoreszenzphotonen gelangen. In der zweidimensionalen Darstellung der Fig. 1 erscheint dieses aber als Scheibchen. Der Begriff Beugungsscheibchen wird hier deshalb ganz allgemein für ein maximales Auflösungsvolumen genommen, welches die verwendete Optik erzielen kann. Die verwendete Optik muss aber nicht zwingend an der Beugungsgrenze arbeiten, auch wenn dies zu bevorzugen ist.

Um nun das Markierungsmolekül 1 innerhalb des Beugungsscheibchens 2 genauer lokalisieren zu können, wird das oben bereits allgemein geschilderte PALM-Verfahren eingesetzt. Dieses aktiviert einzelne Markierungsmoleküle, wobei in dieser Beschreibung ganz allgemein unter dem Begriff Aktivierung die Aktivierung bestimmter Lumineszenzeigenschaften der Markierungsmoleküle verstanden wird, also sowohl ein Einschalten der Lumineszenzanregbarkeit als auch eine Änderung des Lumineszenzemissionsspektrums, was dem Einschalten bestimmter Lumineszenzeigenschaften entspricht. Im hier beschriebenen Ausführungsbeispiel wird die Aktivierung durch optische Aktivierungsstrahlung bewirkt. Es sind aber auch andere nicht-optische Aktivierungsmechanismen möglich.

Die Aktivierung erfolgt nun so, dass es zumindest einige aktivierte Moleküle gibt, deren Schwerpunkt nicht im Beugungsscheibchen anderer aktivierter Moleküle liegt, d.h. die innerhalb des optischen Auflösung zumindest gerade noch unterschieden werden können.

Fig. 2 zeigt schematisch eine exemplarische Situation auf einem Detektor 5, der die Photonen ortauflösend integriert. Wie zu sehen ist, gibt es Bereiche 3, in denen die Beugungsscheibchen 2 benachbarter Markierungsmoleküle überlappen. Hierbei sind, wie im linken Bereich 3 der Fig. 2 zu sehen ist, jedoch lediglich diejenigen Markierungsmoleküle relevant, die zuvor aktiviert wurden. Nicht aktivierte Markierungsmoleküle 1' geben die bestimmte Fluoreszenzstrahlung, welche auf dem Matrix-Detektor 5 aufgefangen wird, nicht ab, spielen also keine Rolle.

In den Bereichen 4, z.B. dem in der Mitte des Matrix-Detektors 5 gelegenen Bereich 4, liegen Markierungsmoleküle 1 so, dass ihr Beugungsscheibchen 2 mit keinem Beugungsscheibchen 2 eines anderen aktivierten Markierungsmoleküls 1 überlappt. Der rechte Bereich des Matrix-Detektors 5 zeigt, dass Bereiche 3, in denen Beugungsscheibchen 2 von aktivierten Markierungsmolekülen 1 überlappen, zu Bereichen 4, in denen dies nicht der Fall ist, durchaus benachbart liegen können. Der rechte Bereich 4 verdeutlicht zudem, dass die Nachbarschaft eines aktivierten Markierungsmoleküls 1 zu einem nicht aktivierten Markierungsmolekül 1' für die Detektion keine Rolle spielt, da ein solches Markierungsmolekül 1' ja die vom Matrix-Detektor 5 detektierte Fluoreszenzstrahlung nicht abgibt, also nicht fluoresziert.

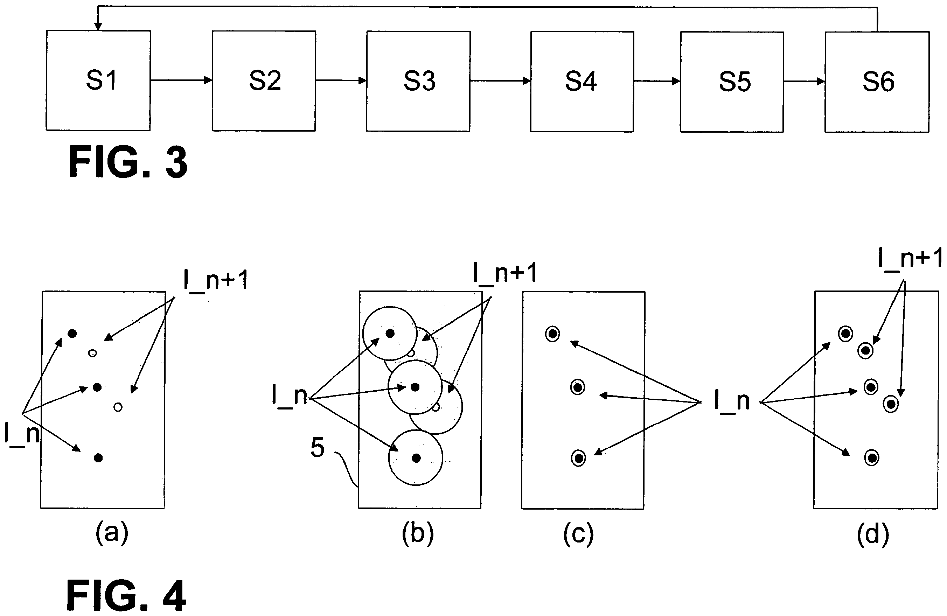

Zur Aufnahme eines jenseits der apparativ vorgegebenen optischen Auflösung detaillierten Bildes, das im Sinne dieser Beschreibung ein hochaufgelöstes Bild ist, werden nun die in Fig. 3 schematisch dargestellten Schritte eingesetzt.

In einem ersten Schritt S1 wird mittels eines Umschaltsignals eine Teilmenge der Markierungsmoleküle aktiviert; sie werden also von einem ersten Zustand, in dem sie zur Abgabe der bestimmten Fluoreszenzstrahlung nicht anregbar sind, in einen zweiten Zustand geschaltet, in dem sie zur Abgabe der bestimmten Fluoreszenzstrahlung anregbar sind. Natürlich kann das Aktivierungssignal auch eine selektive Deaktivierung bewirken, also in Schritt S1 auch ein inverses Vorgehen verwendet werden. Wesentlich ist, dass nach Schritt S1 lediglich eine Teilmenge der Markierungsmoleküle zur Abgabe der bestimmten Fluoreszenzstrahlung angeregt werden kann. Die Aktivierung bzw. Deaktivierung (nachfolgend wird zur Vereinfachung lediglich der Fall der Aktivierung geschildert) erfolgt abhängig von den verwendeten Markierungsmolekülen. Bei einem Farbstoff wie z.B. DRONPA, PA-GFP oder reversibel schaltbaren synthetischen Farbstoffen (wie Alexa/Cyan-Konstrukten) erfolgt die Aktivierung durch optische Strahlung, ist das Umschaltsignal also Umschaltstrahlung.

Die unter der Fig. 3 dargestellte Fig. 4 zeigt im Teilbild (a) den Zustand nach Schritt S1. Lediglich eine Teilmenge der Markierungsmoleküle I_n ist aktiviert. Die Markierungsmoleküle dieser Teilmenge sind mit einem voll ausgezeichneten schwarzen Punkt wiedergegeben. Die restlichen Markierungsmoleküle sind in diesem Schritt nicht aktiviert worden. Sie sind in Teilbild (a) der Fig. 4 mit l_n+1 bezeichnet.

Markierungsmoleküle, die aktiviert wurden, können dann in einem zweiten Schritt S2 zur Abgabe von Fluoreszenzstrahlung angeregt werden. Als Fluoreszenzfarbstoffe werden vorzugsweise aus dem Stand der Technik bekannte fluoreszierende Proteine, wie PA-GFP oder auch DRONPA verwendet. Die Aktivierung erfolgt bei solchen Molekülen mit Strahlung im Bereich von 405 nm, die Anregung zur Fluoreszenzstrahlung bei einer Wellenlänge von etwa 488 nm, und die Fluoreszenzstrahlung liegt in einem Bereich oberhalb von 490 nm.

In einem dritten Schritt S3 wird die abgegebene Fluoreszenzstrahlung detektiert, beispielsweise durch Integration der aufgenommenen Fluoreszenzphotonen, so dass sich die im darunter liegenden Teilbild (b) der Fig. 4 dargestellte Situationen auf dem Matrix-Detektor 5 ergeben. Wie zu sehen ist, überlappen die Beugungsscheibchen der aktivierten Markierungsmoleküle I_n nicht. Die Größe der Beugungsscheibchen wird durch die optische Auflösung der Abbildung auf den Matrix-Detektor 5 festgelegt. Zusätzlich sind in Teilbild (b) der Fig. 4 (theoretische) Beugungsscheibchen von Fluoreszenzmolekülen eingezeichnet, die zur nicht-aktivierten Gruppe I_n+1 gehören. Da diese nicht-aktivierten Markierungsmoleküle keine Fluoreszenzstrahlung abgeben, stört keine in deren (theoretischen) Beugungsscheibchen liegende Fluoreszenzstrahlung die Detektion der Fluoreszenzstrahlung der Teilmenge I_n der aktivierten Markierungsmoleküle.

Damit in der Teilmenge I_n möglichst wenige Beugungsscheibchen so überlappen, daß die Markierungsmoleküle gar nicht mehr unterscheidbar sind, wird die Aktivierungsenergie so eingestellt, dass die Teilmenge I_n nur einen vergleichsweise geringen Anteil der Gesamtmenge der Markierungsmoleküle ausmacht, so dass statistisch viele Markierungsmoleküle bezogen auf das mit der optischen Anordnung auflösbare Volumen unterscheidbar sind.

In einem vierten Schritt S4 wird die Lage der fluoreszierenden Markierungsmoleküle rechnerisch aus der Beugungsverteilung der Fluoreszenzscheibchen ermittelt, wodurch die Auflösung, mit der die Lage der aktivierten Markierungsmoleküle bekannt ist, über die Auflösung der optischen Anordnung hinaus geschärft wird, wie das Teilbild (c) der Fig. 4 zeigt.

Alternativ zu einer rechnerischen Bestimmung ist es ganz grundsätzlich möglich, die aufgenommene Fluoreszenzstrahlung nichtlinear zu verstärken und so mit verringertem Aufwand die Auflösung über die optischen Anordnung hinaus zu schärfen. Die nichtlineare Verstärkung kann beispielsweise gemäß der Funktion S = A • F^{N} (Gleichung 1) oder S = A • exp^{F/w} (mit w = 10^{-N} (Gleichung 2)) beschrieben werden, wobei F die Amplitude des Fluoreszenzsignals, A ein Normierungsfaktor und N eine ganze Zahl größer 1 ist. Besonders vorteilhaft ist eine starke nichtlineare Abhängigkeit des Parameters S von F, also z.B. hohe Werte für N in den Gleichungen 1 oder 2. Natürlich können auch andere Funktionen verwendet werden. Grundsätzlich ist die Nichtlinearität vorzugsweise so gewählt, daß die Halbwertsbreite der Beugungsscheibe einer angestrebten räumlichen Auflösung für die Ortsangabe der Markierungsmoleküle entspricht. Neben einer nichtlinearen Verstärkung kann auch eine nichtlineare Dämpfung verwendet werden. Hierbei werden Fluoreszenzsignale geringer Amplitude oder Intensität gedämpft, wohingegen starke Signale zumindest weitgehend ungedämpft bleiben. Natürlich kann auch eine Kombination von nichtlinearer Verstärkung und Dämpfung verwendet werden.

Ein fünfter Schritt S5 setzt die Markierungsmoleküle, deren Lageangabe präzisiert ist, nun zu einem Einzelbild zusammen, dessen Ortsauflösung über die optische Auflösung hinaus gesteigert ist. Es enthält allerdings nur Informationen über die zuvor aktivierte Teilmenge der Markierungsmoleküle.

In einem sechsten Schritt S6 wird das Einzelbild auf bekannte Weise in ein Gesamtbild eingestellt. Anschließend wird zu Schritt S1 zurückgesprungen, wobei die bisher fluoreszierenden Moleküle wieder deaktiviert sein müssen. Eine Deaktivierung kann je nach Markierungsmolekülart durch eine separate Strahlung oder durch Abklingen des Aktivierungszustandes erreicht werden. Auch ist es möglich bereits abgebildete Markierungsmoleküle durch Anregungsstrahlung zu bleichen.

Mit jedem Durchlauf wird so ein weiteres Einzelbild erhalten, das zum Gesamtbild beiträgt. Im nächsten Durchlauf wird eine andere Teilmenge der Markierungsmoleküle aktiviert, z.B. die in Fig. 4 dargestellt Teilmenge I_n+1.

Durch den mehrfachen Durchlauf durch die Schritte S1 bis S6 wird das Gesamtbild aus Einzelbildern der einzelnen Durchläufe aufgebaut, welche die Orte der Markierungsmoleküle mit einer Ortsauflösung angeben, die gegenüber der Auflösung der optischen Abbildung geschärft ist. Durch eine entsprechende Anzahl von Iterationen baut sich somit ein hochaufgelöstes Gesamtbild sukzessive auf. Die Reduktion des Beugungsscheibchens erfolgt dabei bei dem Verfahren vorzugsweise in allen drei Raumdimensionen, wenn mehrere Bildstapel, welche in z-Richtung beabstandet sind, aufgenommen werden. Dann enthält das Gesamtbild in allen drei Raumrichtungen hochaufgelöst die Ortsangabe der Markierungsmoleküle.

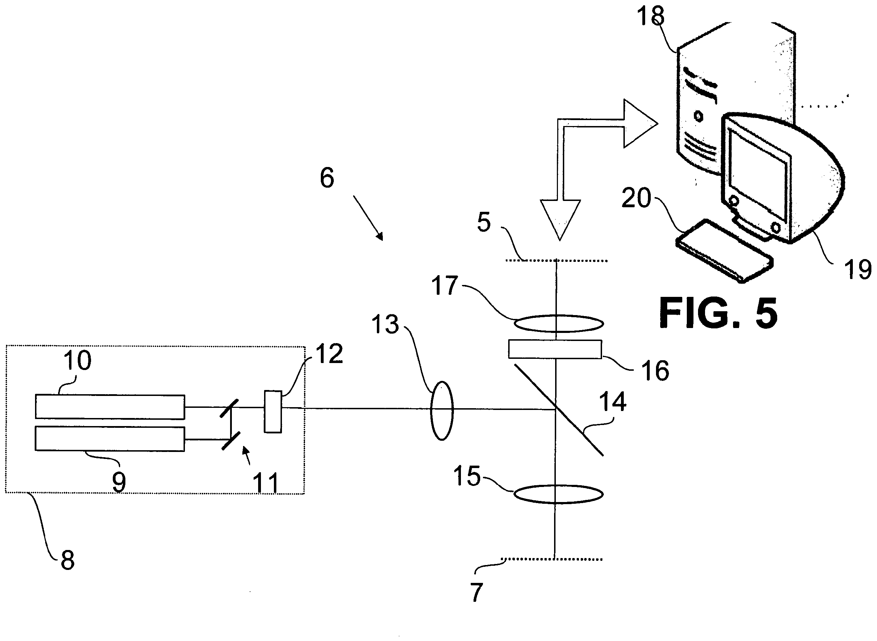

Fig. 5 zeigt schematisch ein Mikroskop 6 zur hochauflösenden Abbildung einer Probe 7. Die Probe 7 ist beispielsweise mit dem Farbstoff DRONPA (vergleiche WO 2007009812 A1) markiert. Zur Aktivierung sowie zur Fluoreszenzanregung weist das Mikroskop 6 eine Strahlungsquelle 8 auf, die über einzelne Laser 9 und 10 verfügt, deren Strahlen über einen Strahlvereiniger 11 zusammengeführt wird. Die Laser 9 und 10 können beispielsweise bei 405 nm (Aktivierungsstrahlung) und 488 nm (Fluoreszenzanregung und Deaktivierung) Strahlung abgeben. Es sind auch Farbstoffe bekannt (z.B. der Farbstoff namens DENDRA (vgl. Gurskaya et al., Nature Biotech., Band 24, S. 461-465, 2006)), bei denen die Aktivierung und Fluoreszenzanregung bei ein- und derselben Wellenlänge erfolgen kann. Dann genügt ein Laser.

Ein akustisch-optischer Filter 12 dient zur Wellenlängenselektion und zum schnellen Schalten oder Abschwächen einzelner Laserwellenlängen. Eine Optik 13 fokussiert die Strahlung über einen dichroitischen Strahlteiler 14 in eine Pupille eines Objektivs 15, so daß auf der Probe 7 die Strahlung der Strahlungsquelle 8 als Weitfeldbeleuchtung einfällt.

In der Probe 7 entstehende Fluoreszenzstrahlung wird über das Objektiv 15 eingesammelt. Der dichroitische Strahlteiler 14 ist so ausgelegt, dass er die Fluoreszenzstrahlung passieren lässt, so dass sie durch ein Filter 16 zu einer Tubuslinse 17 gelangt, so dass insgesamt die fluoreszierende Probe 7 auf den Detektor 5 abgebildet wird.

Zur Steuerung des Betriebs des Mikroskops 6 ist eine Steuereinrichtung vorgesehen, hier als Computer 18 mit Anzeige 19 und Tastatur 20 ausgebildet. Die Verfahrensschritte S2 bis S6 erfolgen im Computer 18. Dabei ist die Bildrate des Matrix-Detektors ausschlaggebend für die Gesamtmeßzeit, so dass ein Matrix-Detektor 5 mit möglichst hoher Bildrate vorteilhaft ist, um die Meßzeit zu reduzieren.

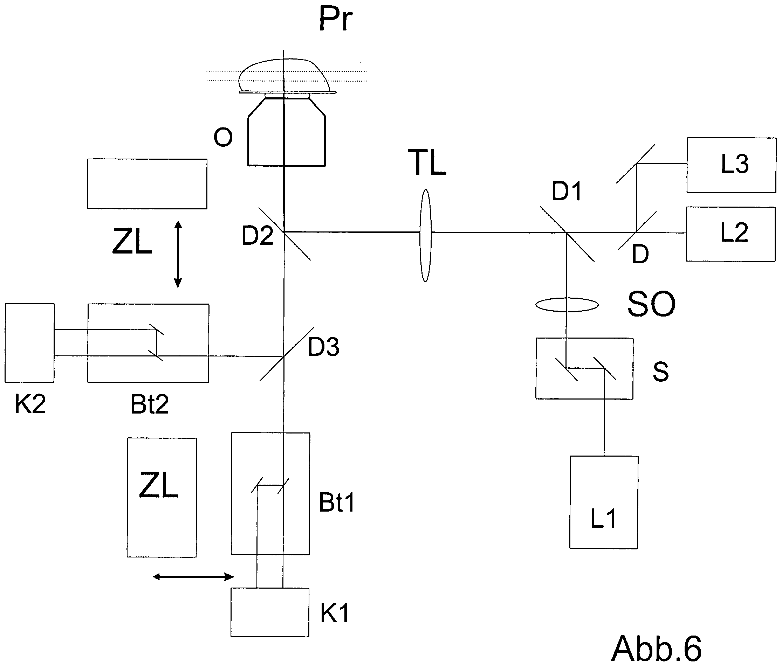

Die Bezugszeichen in Fig. 6-11 bedeuten Folgendes:
Pr: Probe
O: Objektiv
D, D1,D2, D3, D4: dichroitische Strahlteiler
L1-L2: Lichtquellen
Bt1, Bt2: Bildteilermodul (Mehrebenendetektion)
K1, K2: Flächenempfänger ( Kamera)
S: Scanmodul (schematisch) mit X/Y Scannern
Sx: Eindimensionaler Scanner (in X Richtung)
TL: Tubuslinse
SO: Scanobjektiv
SLM: Spatial Light Modulator (räumlicher Lichtmodulator)
G: Gitter
SML: Mikrolinsenarray
SE: Einzelsensoren einer Sensoranordnung
B1, B2: einstellbare Schlitzblenden
Ld1, Ld2: Liniendetektor
ZL: Anamorphotische Optik wie Zylinderlinse
SF: Strahlformer für Linienfokus (anamorphotische Optik)

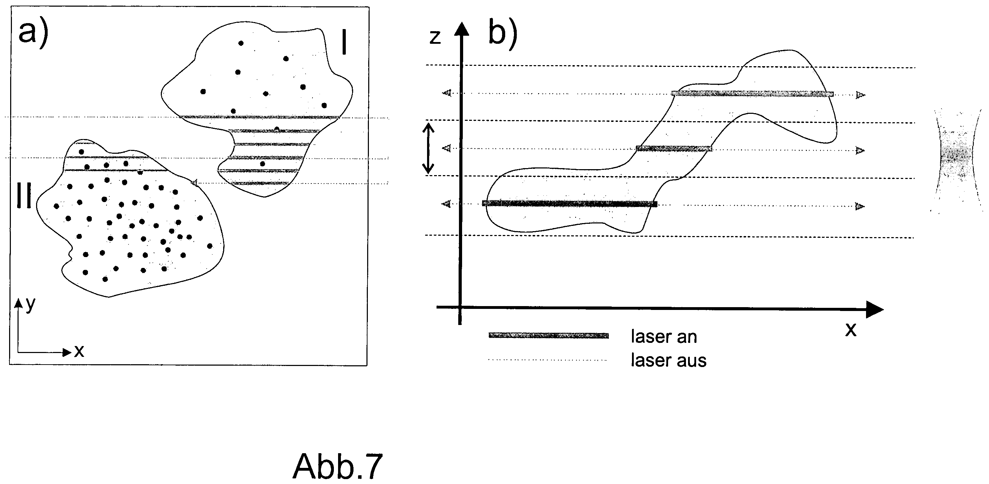

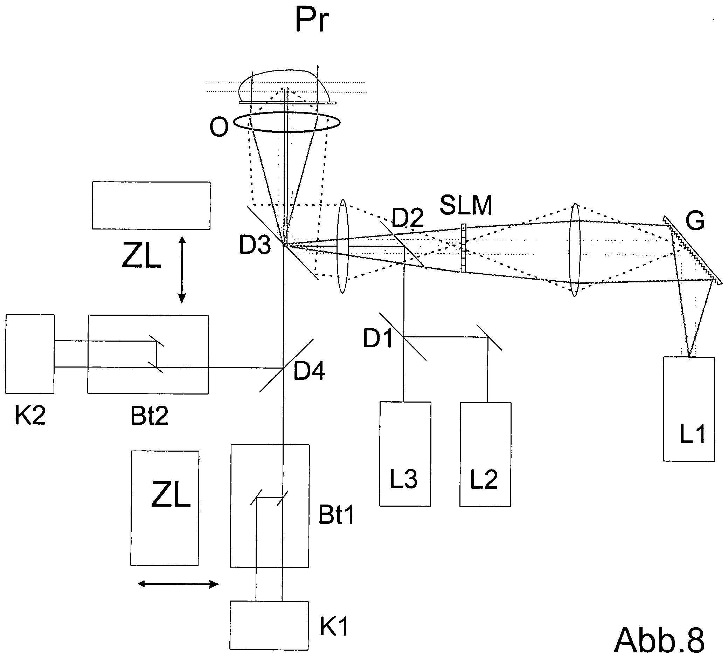

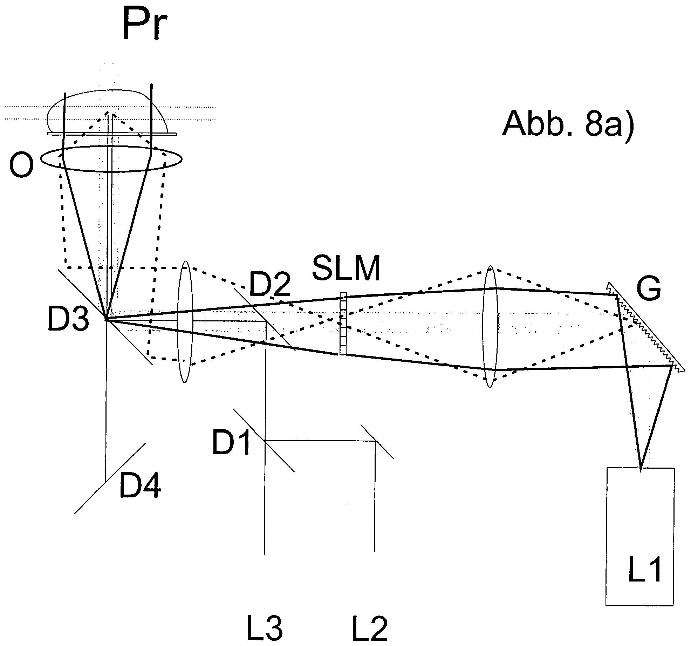

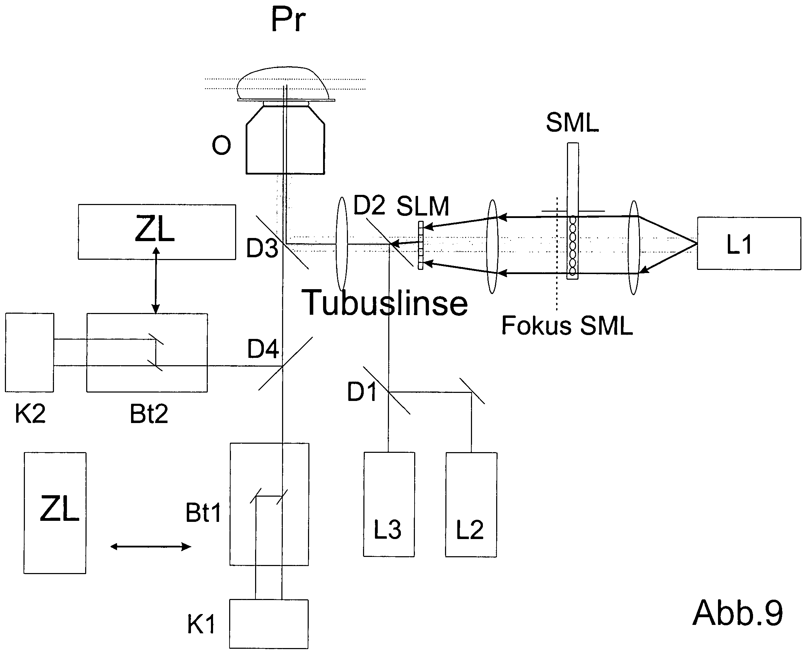

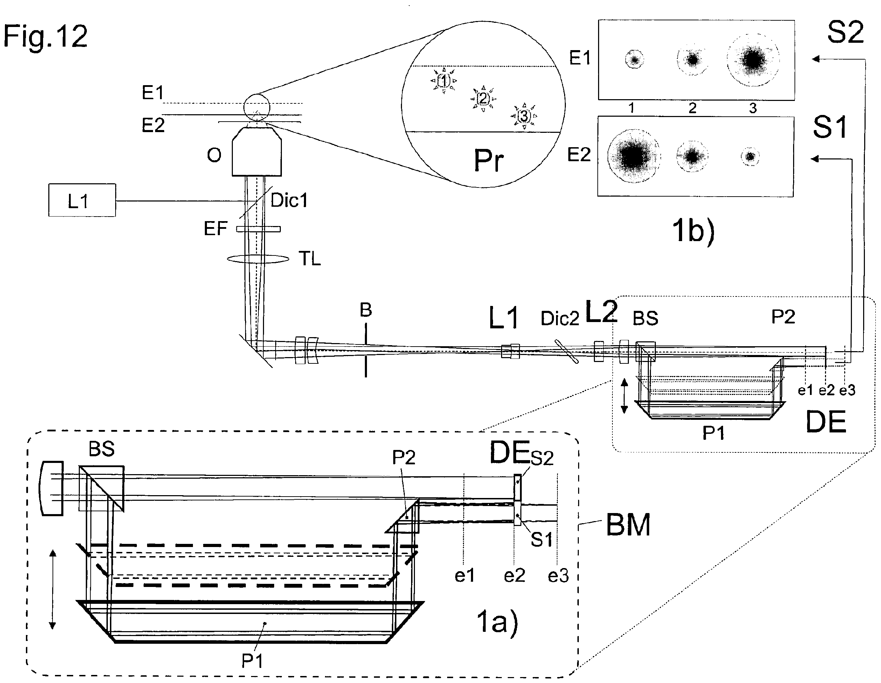

Den meisten Zeichnungen gemeinsam ist, dass wie in Fig 6-10 am Beispiel des PALM Verfahrens beschrieben, ein erster Laser L1 zum Schalten (Aktivieren) des Farbstoffes vorgesehen ist und Laser L2, L3 zur Fluoreszenzanregung / Deaktivierung von Farbstoffen in der Probe Pr im Weitfeld vorgesehen sind und eine oder mehrere Kameras (bevorzugt CCDE) zur Weitfelddetektion vorgesehen sind. Die Abbildungen 6 und 8 erläutern die Ausführingsbeispiele gemäss des Anspruchs 1 bzw. des Anspruchs 2. Weitere Details werden in den Abbildungen 12-14 gezeigt. Die Abbildung 7 erläutert die Funktion der Vorrichtung nach Abb. 6. Die Abbildungen 9-11 betreffen Beispiele, die nicht Teil der vorliegenden Erfindung sind.

In die Offenbarung einbezogen sind weitere Verfahren zur zeitabhängigen Aktivierung/ Deaktivierung von Farbstoffen zur Erzeugung hochaufgelöster mikroskopischer Bilder wie eingangs im Stand der Technik beschrieben.

Unter Mehrebenendetektion wird beispielsweise insbesondere ein Bildteilermodul gemäß Fig. 12-14 bzw. eine anamorphotischen Abbildung sowie Ausführungen des Standes der Technik ([7,8]) verstanden.

Unter "ROI"- " regions of interest" werden automatisch oder manuell, beispielsweise anhand eines Übersichtsbildes vorausgewählte Gebiete verstanden, die selektiv mit Strahlung beaufschlagt werden können.

### Bi-Plane Detektionsschema mit 2P-Schalten durch Punktscanner

Abbildung 6 zeigt ein erfindungsgemäßes tiefenselektives 3D-Hochauflösungs-Fluoreszenzmikroskop (schematisch) in einer 2-Kanal Ausführung (für 2 unterschiedlich, simultan zu beobachtende Fluorophore mit zwei Kameras K1, K2.

Ein punktscannender Scanmodul S folgt in Beleuchtungsrichtung einem Laser L1 zum Schalten über eine 2P Anregung, dies kann eine ps-Laserdiode oder sogar ein cw-Diodenlaser im Bereich 780-830nm sein (oder eine andere, für den 2P-Schaltvorgang geeignete Wellenlänge), eingekoppelt in den Beleuchtungsstrahlengang wird der Laser L1 über Dichroit D1.

Laser zur Weitfeld-Anregung L2 und L3 in verschiedenen Wellenlängen sind über D in den Beleuchtungsstrahlengang eingekoppelt. Die Fluoreszenz-Detektion erfolgt über D2 in Transmission in Richtung der Kameras K1, K2, mit einer Aufspaltung in zwei Farbkanäle für unterschiedliche Wellenlängen zweier Fluorophore über D3. Für jede Farbe kann eine Aufspaltung des Bildes über Bildteilermodul (Bt1 und Bt2) wie in Fig. 12-14 beschrieben erfolgen.

Es erfolgt hier also vorteilhaft eine Fluoreszenzanregung durch Laser-Weitfeldbeleuchtung sowie Weitfeld-Detektion durch (sensitive) Kameras wie bei PALM und vergleichbaren lokalisierungsbasierten Hochauflösungsverfahren üblich.

Die Detektion erfolgt hier vorteilhaft mit einem Biplane (Mehrebenen) -Detektionsschema [7,8], Fig.12-14 zur hochgenauen Lokalisierung der Moleküle auch auf der z-Achse.

Dabei wird das Bild vorteilhaft (siehe Fig. 12-14) durch die Bildteilermodule (Bt1/2 in Abbildung 6) so aufgespaltet, dass zwei Teilbilder mit jeweils halber Intensität entstehen, deren konjugierte Objektebenen um beispielsweise ca. eine halbe axiale PSF versetzt sind.

Diese Teilbilder werden nebeneinander auf den Kamerasensor (K1/K2) abgebildet und können entsprechend [7,8] ausgewertet werden, um aus den 2 Teilbildern der einzelnen Fluorophore deren z-Position zu bestimmen.

Eine besonders vorteilhafte Ausführung dieses Bildteilermoduls ist Gegenstand von Fig. 12-14 mit folgenden Vorteilen:
- Telezentrie
- keine Veränderung des Abbildungsmaßstabs als Funktion der z-Position
- paralleler Einfall auf Detektor (→ keine z-abhängige Verzerrung der PSF)
- einstellbare z-Aufspaltung und damit Möglichkeit der Anpassung an verschiedene Objektive und Einbettmedien
- Möglichkeit, die Aufspaltung auf Null einzustellen, wobei die Referenzbildebene auf der Probenoberfläche liegen kann; die einstellbare Aufspaltung erfolgt dann in die Probe hinein (und nicht ins Deckglas, wie bei bekannten Ausführungen)
- Möglichkeit, die Aufspaltung zu entfernen, um normale Kameraabbildung mit vollem Sensor auszunutzen.

Besonders vorteilhaft liegt der mit den geschilderten Bildteilermodulen nach Fig. 12-14 erreichte Tiefenschärfenbereich in einem ähnlichen Bereich wie die minimale Schichtdicke der Zweiphotonenanregung, (beispielsweise 700 nm) bzw. kann mit der Anordnung nach Fig.12-14 dergestalt variabel angepasst werden. So ergibt sich ein optimaler Überlapp von aktivierter (=geschalteter) Schicht und hochauflösend vermessener Schicht.

Das Schalten (Photokonvertieren) der Fluorophore von ihrem nicht-anregbaren in ihren anregbaren Zustand (Vorraussetzung für PALM) erfolgt hier über einen fokussierten, punktgescannten Anregungsstrahl, dessen Wellenlänge so gewählt wird, dass der Schaltvorgang durch einen 2-Photonen Absorptionsprozess erfolgt während die Fluoreszenzanregung und -detektion der so geschalteten Fluorophore im Weitfeld erfolgt.

Aufgrund der stochastischen Aktivierung der Photoschalter beim PALM-Verfahren muss die gerasterte Aktivierung dabei nicht notwendigerweise mit der Bildaufnahme der Kamera synchronisiert werden.

Das 2P-Schalten (Konvertieren) führt vorteilhaft zu dem aus der 2-Photonen-Mikroskopie bekannten "sectioning", also das selektive Anregen nur der Moleküle in der Fokalebene. So lässt sich eine z-Auflösung vergleichbar zur Konfokalmikroskopie erreichen, ohne ein konfokales Pinhole einsetzen zu müssen. Damit kann das Verfahren einfach mit der für PALM erforderlichen Kamera-Weitfeld-Detektion kombiniert werden.

Zudem wird im Gegensatz zur konfokalen Detektion das ausserfokale Schalten vermieden, was insbesondere für die Aufnahme von hochaufgelösten z-Stapeln wichtig ist.

Es ist bekannt, dass die Photokonvertierung (das Schalten) der typischerweise verwendeten Photoschalter für die PALM-Mikroskopie nur extrem geringe Intensitäten erfordert. Daher kann der 2P-Effekt auch mit kostengünstigen cw-Lasern erreicht werden, vorteilhaft gegenüber teuren Kurzpuls-Lasern für die 2P-Mikroskopie.

Für Fluorophore oder Anwendungen bzw. Probenpräparationen, die für den 2P-Schaltvorgang höhere Leistungen erfordern, kann eine im Pikosekunden - Modus betriebene Laserdiode verwendet werden (Ausführungsbeispiel), oder andere, kostengünstige ps-Lasersysteme.

Die typischen 2P-Schaltwellenlängen für die üblichen PALM-Fluorophore liegen bei 760 - 850 nm, ein Bereich, der gut mit kostengünstigen Halbleiterlasern abgedeckt wird.

In Abbildung 7 erfolgt in a) eine Anpassung der Schaltintensität des punktgescannten Schaltlasers an die Markierungsdichte in der Probe. In dem dünner markierten Bereich I wird die Schaltintensität erhöht, um die Rate der lokalisierten Moleküle an die im dichter markierten Bereich II anzugleichen." 7b) zeigt einen schematischen Bildstapel in x-z- Schnitt.

Durch gezieltes Anschalten des scannenden Aktivierungslasers nur in zuvor manuell oder automatisch definierten ROI-s wird das unerwünschte Schalten ober- und unterhalb der gerade aufgenommenen Schicht vermieden. Dies ist insbesondere von Vorteil bei Aufnahme von z-Stapeln, die aus mehreren solchen Schichten bestehen.

Mit dem punktgescannten Schaltstrahl lassen sich ROls (Region Of Interest- siehe DE 198 29 981 A1 definieren, innerhalb derer die Fluorophore aktiviert werden; bei TIRF-PALM werden dagegen immer alle Bereiche der Probe aktiviert. So kann mit dem hier beschriebenen Verfahren z.B. die Schaltintensität innerhalb eines Frames optimal an die Markierungsdichte der Probe angepasst werden (vgl. Abbildung 7a)). Damit kann die Bildaufnahmezeit verringert werden, was insbesondere für die Aufnahme von 3D-Bildstapeln von Bedeutung ist. Zudem können so auch die Lokalisierungsraten mit unterschiedlichen Fluorophoren markierter Bereiche in der Probe aneinander angeglichen werden.

Ein weiterer Vorteil besteht darin, dass unerwünschtes Schalten von Molekülen in Probenbereichen ober- und unterhalb der gerade aufzunehmenden z-Schicht minimiert werden kann (zusätzlich zu dem o.g. intrinsischen Sectioning der 2P-Anregung), indem die Aktivierungsstrahlung nur in den Probenbereichen mit eingefärbten Strukturen überhaupt angeschaltet wird (Abbildung 7 b)).

Ein vorteilhaftes Verfahren für einen sequentiellen Ablauf für anzahlgesteuerten Feedback für 2P-Schalten kann erfolgen.

Es ermöglicht bei inhomogen eingefärbten Proben ein schnelleres Erreichen einer vergleichbaren Lokalisierungsdichte in unterschiedlichen Probenbereichen und damit eine Beschleunigung der Aufnahmezeit:
Nach der Aufnahme des Kamera-Bildes (optional: Echtzeit-Lokalisierung) erfolgt eine Bestimmung der Anzahl oder Anzahldichte der lokalisierten Moleküle pro ROI sowie ein Vergleich {Fläche ROl:Anzahl} mit der PSF derart:
Wenn {Fläche ROl:Anzahl} >> (größer als) der PSF ist, wird die Intensität des 2P-Schaltstrahls für diese ROI erhöht.
Wenn {Fläche ROl:Anzahl} ~= (im Bereich) der PSF ist, wird die Intensität des 2P-Schaltstrahls für diese ROI verringert.

Es erfolgt ein Ausgeben der entsprechenden Intensitätsmodulation auf den scannenden 2P-Schaltstrahl und ein nächstes Kamerabild wird aufgenommen.

### Ein Verfahren für ROI - gesteuerten Feedback für 2P-Schalten:

minimiert das ungewollte Schalten von Molekülen in Probenbereichen ober- und unterhalb der gerade gemessenen Probenebene durch folgende Schritte:
- Definition eines oder mehrerer ROl's automatisch oder manuell anhand eines mit hoher Schalt- und/oder Anregungsintensität aufgenommenen ersten Bildes oder anhand eines mit anderen Kontrastfunktionen gewonnenen Bildes (DIC).
- Ausgeben der entsprechenden Intensitätsmodulation auf den scannenden 2P-Schaltstrahl, so dass nur innerhalb der vorgegebenen ROls die Schaltstrahlung "an" ist.
- Innerhalb dieser vordefinierten ROls kann wie unter 9.3.2 die Anpassung der Schaltintensität an die Zählrate der Moleküle erfolgen.

Die beschriebene Regelung der Schaltintensität ist insbesondere vorteilhaft für Proben, die mit unterschiedlichen Fluorophoren eingefärbt sind, die gleichzeitig vermessen werden.

So können die ggf. unterschiedlichen Schaltraten der unterschiedlichen Moleküle durch die räumliche Anpassung der Schaltintensität angepasst werden und so die Aufnahmezeit für Mehrfarbmessungen reduziert werden. Die ROI's können anhand von Probenmerkmalen definiert werden, oder aber als regelmäßiges Raster mit Feldern geeigneter Größe über das Bild gelegt werden; letzteres ist insbesondere für die u.g. Ausführungen mit Weitfeld -Schaltbeleuchtung (temporal focussing, spinning microlens disc) vorteilhaft.

### Bi-Plane Detektionsschema mit 2P-Schalten mittels Linienscanner

Um die für PALM nötige Aktivierung einer stochastischen Untermenge von Fluorophoren pro Kameraframe zu erreichen, kann insbesondere für schnelle Bildaufnahmeraten eine sehr hohe Scangeschwindigkeit eines Punktscanners erforderlich sein. Bei Verwendung einer Linie zum 2P-Schalten reduziert sich die Scannergeschwindigkeit entsprechend. Die mit der Linie verbundene Reduzierung der Spitzenintensität kann aufgrund der geringen erforderlichen Schaltintensitäten in Kauf genommen werden.

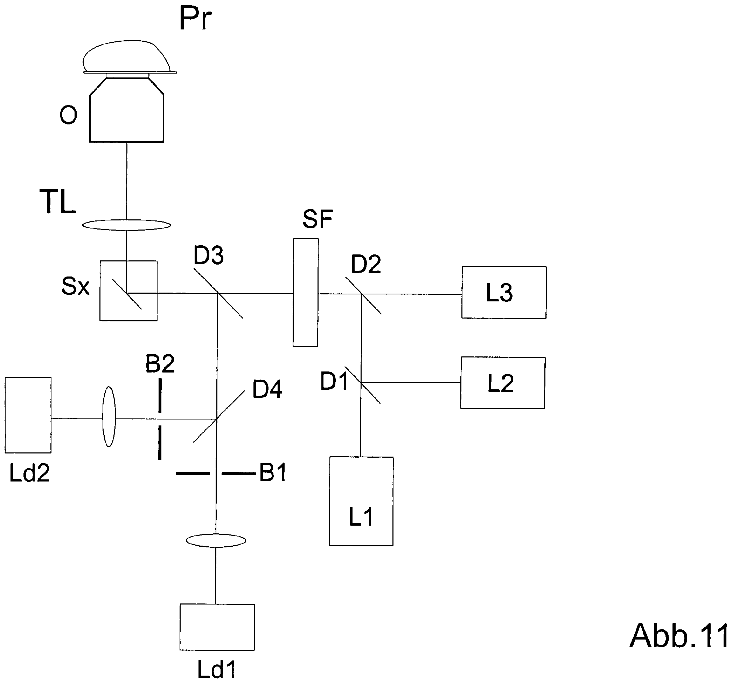

Anstelle eines Punktscanners in Fig. 6 zur 2P Anregung kann also auch ein Linienscanner verwendet werden (siehe auch Fig.11, nicht zur Erfindung gehörend).

Die geringen Intensitäten, die zum Schalten der Farbstoffe erforderlich sind, machen auch den Einsatz einer gescannten Linie in Verbindung mit dem 2P-Schaltprozess möglich.

Diese Linie kann beispielsweise mit einer anamorphotischen Optik erzeugt werden und mit einem eindimensionalen Scanner durch das Objekt bewegt werden.

Der Vorteil ist, daß ein schnellerer Scan möglich ist, da nur 1D-Scan erforderlich ist.

Da die Aktivierung stochastisch erfolgt und im Weitfeld detektiert wird, muss die Linie nicht synchronisiert werden mit der Bildaufnahme.

### Bi-Plane Detektionsschema mit 2P-Schalten mittels temporal focussing

Abbildung 8 zeigt ein erfindungsgemäßes tiefenselektives 3D-Hochauflösungsmikroskop (schematisch) mit L1 als Aktivierungslaser; L2,L2 als Anregungslaser, einem Gitter G: Gitter; einem SLM: Spatial Light Modulator (siehe hierzu beispielsweise DE 199 305 32 A1); D1-D4 sind dichroitische Strahlteiler bzw. -vereiniger, Bt1 u. 2: Bildteilermodule, K1 und K2 wiederum Kameras.

In Fig. 8a ist der Strahlengang von der Lichtquelle zur Probe vergrößert dargestellt.

Der Beleuchtungsstrahlengang ist mit einer durchgehenden Linie gezeichnet und die Abbildung gestrichelt.

Er gilt sinngemäß auch für die Darstellung in Fig. 9 (nicht zur Erfindung gehörend).

Das Objektiv O ist schematisch durch eine Linse dargestellt.

Das Gitter steht in einem Zwischenbild und wird ins nächste Zwischenbild abgebildet (gestrichelt), in dem sich der SLM befindet. Dieser wiederum wird in die Probe Pr abgebildet.

Dagegen "versetzt" ist das Beleuchtungsbündel (durchgehende Linie) des Lasers. In den scharfen Zwischenbildern (Gitter, SLM, Probe Pr) ist der Beleuchtungsspot Spot jeweils maximal unscharf.

Hier kann wiederum eine ROI-Funktionalität wie oben dargestellt erfolgen, mit dem Unterschied, dass die jeweilige Schaltintensität nun über den SLM im Zwischenbild eingestellt wird.

Diese Anordnung kommt vorteilhaft ohne bewegte Teile aus (nichtscannend) und erreicht eine ähnliche Flexibilität wie die zuvor geschilderten Scananordnungen.

Die Tiefenselektion wird nun über den 2P-Schalteffekt in Verbindung mit zeitlicher Fokussierung erreicht [11 und Referenzen darin]. Dazu wird mit dem aufgeweiteten Strahl eines KurzpulsLasers L1 mit einer Wellenlänge geeignet zur 2P-Anregung des Schaltvorgangs ein Gitter G beleuchtet. Der beleuchtete Bereich des Gitters G wird dann in die Probe Pr abgebildet. Das Gitter G spaltet die spektralen Anteile des Laserpulses auf, so dass die ursprüngliche kurze Pulsform nur im Fokus der Abbildung (und ggf. Zwischenbildern) erreicht wird und entsprechend nur dort die hohen Spitzenintensitäten für den 2P-Aktivierungsvorgang vorliegen.

Wie in (11) dargestellt erfolgt in einem teleskopischen Strahlengang erst in der Probe Pr (der Bildebene des Teleskops) eine Wiederherstellung der kurzen Pulse.

Ein SLM als Modulator für die aufgespaltenen Wellenlängen wird in einem Zwischenbild der Abbildung positioniert, wo die ursprüngliche Pulsform wieder hergestellt ist.

Durch selektives Schalten der SLM Elemente werden ROI erzeugt.

Hier kann die ROI-Funktionalität jetzt auch in der Weitfeld-Anregung (zusätzlich zum Schalten) erfolgen. Dazu muss auch die Laser-Weitfeld-Anregung durch den SLM geführt werden oder einen eigenen SLM erhalten; dann ist auch die getrennte Definition von ROls für Anregung und Schalten möglich. Diese Ausführung ist in Abbildung 8 für den Fall einer 2-Farb-Anregung und -detektion dargestellt.

Alternativ zum SLM kann auch ein DMD (Digital Micromirror Device)-array eingesetzt werden; Aufbau analog zu Abbildung 8, das DMD-array muss nun aber in Reflektion eingesetzt werden (wiederum im Zwischenbild).

Astigmatismus/Zylinderlinse Detektionsschema mit 2P-Schalten durch Punktscanner Der Aufbau entspricht Abbildung 6, 8 (beide erfindungsgemäß), 9 (nicht zur Erfindung gehörend), jedoch mit Zylinderlinse(n) ZL im Detektionsstrahlengang anstelle von Bt1 und/oder Bt2.

Dies ist in Abbildung 6, 8, 9 optional durch einen Pfeil gekennzeichnet.

### Bi-Plane Detektionsschema mit 2P-Schalten mittels rotierender Mikrolinsen-Scheibe

Abbildung 9 (nicht zur Erfindung gehörend) zeigt ein tiefenselektives 3D-Hochauflösungsmikroskop (schematisch) mit scannender Mikrolinsen-Scheibe (SML). Die Bezeichnungen sind ansonsten wie in Abbildung 8.

Eine Beleuchtung erfolgt durch 2P-Laser L1 beispielsweise um 800 nm (z.B. ps-Laserdiode), Nach einer Strahlanpassung auf ein Mikrolinsenarray (scanning microlens array) (SML) werden die Foki der (rotierenden) Mikrolinsen über ein Zwischenbild mit einem darin befindlichen SLM in die Probe abgebildet. Damit ist eine schnell gescannte 2P-Punktquelle zum Schalten der Fluorophore mit ROl-Funktionalität über den SLM realisiert.

Zusätzlich erfolgt eine Einkopplung der Laser-Weitfeldbeleuchtung zur Anregung der Fluorophore über Dichroit 1 (D1). Detektion und z-Information entsprechen den obigen Beispielen.

Vorteile sind:
- die Schnelligkeit
- und die konfokale Tiefendiskriminierung bei Weitfeldbeleuchtung, kombiniert mit
- ROI-Funtionalität durch SLM oder DMD.

### Konfokales Hochauflösungsmikroskop mit Linienscanner

Die in beschriebenen lokalisierungsbasierten Hochauflösungsverfahren lassen sich prinzipiell nicht mit einem Standard-LSM durchführen: die Sub-PSF-genaue Lokalisierung muss durch das gleichzeitige räumliche Oversampling durch die Kamerapixel erfolgen, da die Moleküle nur für eine beschränkte Zeit fluoreszieren bzw. zu unvorhersagbaren Zeitpunkten (stochastisch) aktiviert werden. Damit schließt sich ein Verfahren, bei dem der Schwerpunkt des Moleküls sequentiell bestimmt wird (Rasterverfahren), aus.

Bei der wie bisher praktizierten Weitfeldabbildung wiederum fällt die wünschenswerte Tiefenselektion durch die konfokale Abbildung eines LSM weg.

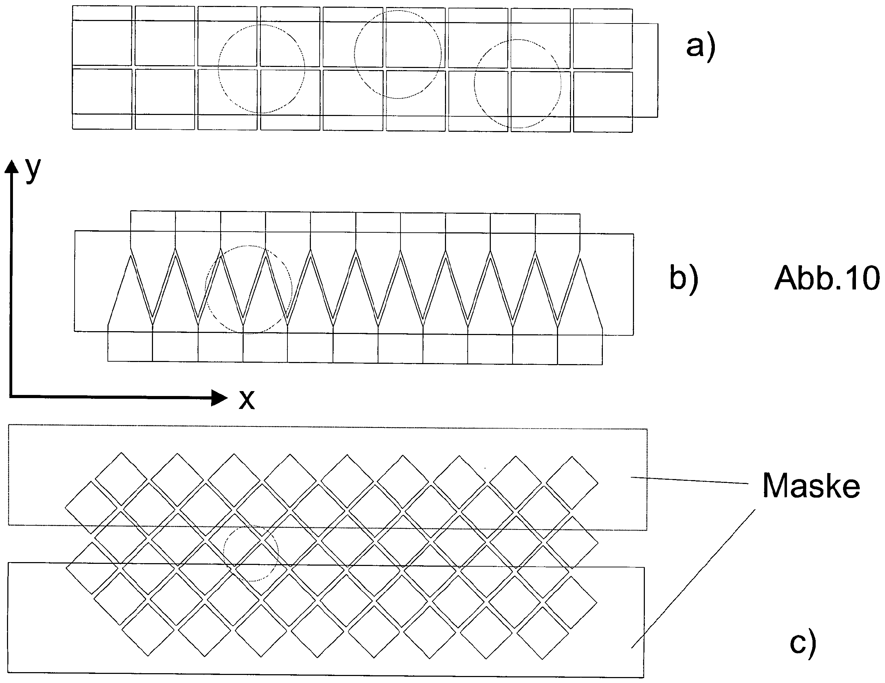

Die hier vorgestellte Anordnung aus speziellem Liniensensor (Abbildung 10, nicht zur Erfindung gehörend) und entsprechendem Mikroskop (Abbildung 11, nicht zur Erfindung gehörend) erlaubt jedoch die vorteilhafte Kombination von konfokalem Linienscan und lokalisierungsbasierter Hochauflösung und ermöglicht damit ein PALM-artiges hochauflösendes Mikroskopieverfahren in Verbindung mit der Tiefenselektion eines Konfokalmikroskops.

Zur Erhöhung der Eindringtiefe kann die Linienbeleuchtung für Schalten und/oder Anregung auch durch einen Mehrphotonenprozess erfolgen.

Dieser Ansatz unterscheidet sich von Abb. 6 dadurch, dass hier Tiefenselektion durch eine konfokale Linienabbildung erreicht wird.

Abbildung 10: a) zeigt ein Prinzip der lokalisierungsbasierten konfokalen Hochauflösungsmikroskopie mit einem Liniensensor, 10 b) einen Sensor mit verzahnter Pixelstruktur, 10 c) ein Beispiel zur Realisierung einer verzahnten Pixelstruktur mit bestehenden Pixelgeometrien durch Maskieren.

Abbildung 10 a) (nicht zur Erfindung gehörend) erläutert das Prinzip anhand eines 2-zeiligen Liniensensors (beispielsweise den Sensor einer Zeilenkamera wie in der Machine Vision häufig verwendet).

Die laterale Lokalisierung (entlang der Zeilenrichtung) kann wie bekannt durch Schwerpunktbildung oder Fitten einer geeigneten Funktion (1D-Gauss) erfolgen, wobei die ineinandergreifenden Pixel beider Zeilen zu berücksichtigen sind. Die Lokalisierung orthogonal zur Zeilenrichtung kann durch Bildung des Differenzsignals der entsprechenden Pixel der gegenüberliegenden Pixelreihen erfolgen. Das Prinzip entspricht hier einem positionsempfindlichen Detektor (position sensitive detector, PSD). Damit die PSD-Funktion gewährleistet ist, muss die konfokale Schlitzblende auf etwas mehr als eine Airy-Einheit geöffnet werden.

Die unterschiedlichen Lokalisierungsgenauigkeiten in x- und y-Richtung, die sich bei diesem Ansatz ergeben können, können durch alternative Sensordesigns angepasst werden. Abbildung 10 b) (nicht zur Erfindung gehörend) zeigt eine mögliche Sensorstruktur mit zwei ineinandergreifenden Kämmen.

Hier muss zur Bestimmung der y-Koordinate zuvor die ermittelte x-Position ausgewertet und berücksichtigt werden, da durch die verzahnte Pixelstruktur die PSD-Funktion (y-Schwerpunktsbestimmung) von der x-Position des zu lokalisierenden Moleküls abhängt.

Die Abbildung der Linie ist so zu wählen, dass die PSF-Breite gerade der Breite einer Pixelzeile entspricht; sie wird aber auf das Zentrum der ineinandergreifenden Kammstruktur zentriert.

Abbildung 10 c) (nicht zur Erfindung gehörend) zeigt einen alternativen Realisierungsvorschlag basierend auf herkömmlichen, quadratischen Pixelgeometrien. Hier kann beispielsweise ein normaler Sensor um 45 Grad gedreht werden, um diese Pixelorientierung zu erhalten. Prinzipiell kann dazu auch ein Flächensensor verwendet werden, der bis auf die gewünschte Linie zur Detektion maskiert wird. Diese Maske kann auch als variable Blende ausgeführt werden.

Es werden mehrere, vorteilhaft zwei Reihen von Pixeln zur Auswertung herangezogen. In 10 a) - c) ist jeweils schematisch gestrichelt ein Molekül eingezeichnet, das von mehreren Detektorelementen erfasst wird.

Zu diesem Zweck wird die vorhandene Spaltblende bei einem Linienscanner etwas geöffnet, um zwei Reihen gleichzeitig zu erfassen. In 10 a) und b) ist das hierdurch erfasste Spaltbild dargestellt.

In Fig. 10 c) ist der erfasste Bereich beispielhaft etwas heller dargestellt als der darüber und darunter befindliche ausgeblendete Bereich.

Durch gegenseitige Subtraktion von vorteilhaft vier Detektorelementen, die nebeneinander liegen und jeweils ein Signal erfassen, kann der Schwerpunkt des erfassten Moleküls exakt bestimmt werden (durch Betrag und Vorzeichen des Subtraktionsergebnisses).

Hinzu kommt eine Tiefeninformation aus Form und Größe, beispielsweise mit dem vorn zitierten Verfahren.

Abbildung 11 (nicht zur Erfindung gehörend) zeigt schematisch eine mögliche Ausführung eines tiefenselektiven Hochauflösungsmikroskops basierend auf diesem Sensorprinzip.

Abbildung 11 zeigt ein tiefenselektives 2D-Hochauflösungs-Konfokalmikroskop (schematisch) mit Linienscanner, beispielhaft für Zweifarben-Detektion. Schalt- und Anregungslaser (L1-L3) werden über einen Strahlformer (SF) auf Linienform gebracht und in einer Raumrichtung gerastert (Scanner Sx). In Detektion wird die Linie durch entsprechende Schlitzblenden konfokal auf Liniendetektoren (Ld1, Ld2) abgebildet wie im Text vorher beschrieben. D1-D4 sind dichroitische Strahlteiler bzw. -vereiniger.

Die Linie zur Beleuchtung wird durch die Strahlformungsoptik SF (Zylinderlinse) erzeugt und in einer Raumrichtung gerastert (Scanner Sx). Die Fluoreszenz wird über Schlitzblenden B1 und B2 (hier Ausführungsbeispiel mit zwei Farbkanälen) konfokal auf die wie in Abb. 10 skizzierten Liniendetektoren Ld1 und Ld2 abgebildet.

In Fig. 12-14 sind vorteilhafte variable Bildteilermodule Bt1, Bt2 (siehe z.B. Fig. 6) zur z-Aufspaltung skizziert.

Die Bezugszeichen bedeuten im Einzelnen:
E1, E2: Objektebenen
BM: Bildteilermodul
O: Objektiv
Dic1: Hauptfarbteiler
L1: Lichtquelle
EF: Emissionsfilter
TL: Tubuslinse
SP: Umlenkspiegel
B: Blende (telezentrische Blende)
L1, L2: Linsengruppen
Dic 2: Farbteiler zu optionalen Ausblendung
BS: Strahlteilerwürfel
P1: Zweifach - Umlenkprisma , verstellbar senkrecht zur optischen Achse
P2: Umlenkprisma
DE: Weitfelddetektor
S1, S2: Sensorhälften
e1, e2, e3: Bildebenen

Fig. 12 zeigt einen Weitfeld-Strahlengang mit einer aufgeweiteten Lichtquelle L1 und einem ortsaufgelösten Flächendetektor DE, beispielsweise einer CCD Kamera.

Das Licht der Lichtquelle L1 gelangt (reflektiert) über Dic 1 und das Objektiv O auf eine Probe Pr.

Das reflektierte und fluoreszierende Probenlicht gelangt über das Objektiv O in Richtung der Detektion.

Am Teiler Dic 1 und durch den Filter EF erfolgt eine Selektion des erwünschten Lichtes, hier eine Unterdrückung des reflektierten Lichtes, das heißt nur das Fluoreszenzlicht gelangt in Richtung der Detektion.

Über SP, L1, L2 gelangt das Probenlicht in die erfindungsgemäße Anordnung aus BS, P1 und P2 und dann auf den Detektor DE.

E1 und E2 sind unterschiedliche Objektebenen in der Probe Pr.

Fig. 12a zeigt eine vergrößerte Ansicht des erfindungsgemäßen variablen Bildteilermoduls BM. Ein Bild der Probe Pr wird über den Strahlteilerwürfel BS in zwei Teilbilder auf dem Detektor DE aufgespaltet. Das Prisma P1 wird motorisch senkrecht zur optischen Achse verschoben, um die Aufspaltung der beiden Objektebenen E1, E2 einzustellen. Über P2 (fest) wird das verschobene Teilbild wieder in den durchgehenden Strahlengang, durch P2 räumlich, versetzt zum durchgehenden Strahlengang, das heißt seitlich auf DE versetzt, eingespiegelt.

Anhand von Bildebenen e1-e3 ein- und derselben Objektebene in Pr, beispielsweise E1, wird die Erfindung weiter erläutert:
Die gestrichelte Position von P1 deutet die kürzeste mögliche Position von BM an; die damit erzielte Bildebene e3 läge hinter dem Detektor DE.

Die Bildebene e2 des nicht abgelenkten Teilbildes liegt auf dem Sensor (Teilbereich S2 des Sensors). Durch Verschieben des Prismas P1 nach außen in die untere Stellung in Fig. 12a wird der Weg verlängert und die Bildebene e1 wandert (entgegengesetzt zum Lichtweg) nach vorne.

Daraus folgt, dass ein Objekt (Molekül), das sich in Objektebene E2 befindet, auf Sensorhälfte S2 scharf und auf Sensorhälfte S1 unscharf abgebildet wird. Entsprechendes gilt für ein Objekt, das sich in Objektebene E1 befindet, bzw. zwischen E1 und E2 (E1 wäre scharf auf S1 und E2 wäre scharf auf S2; alles andere wäre unscharf bei der gleichen Prismenposition).

In Fig. 12b sind vergrößert Punktbilder von Molekülen 1, 2, 3, jeweils aus den Objektebenen E1, E2 auf den Sensorhälften S1 und S2 dargestellt.

Es wird ersichtlich, dass in E1 und E2 jeweils in unterschiedlichen Ebenen angeordnete Moleküle (1 in E1 und 3 in E2) in S1 (Molekül 1) und S2 (Molekül 3) scharf detektiert werden, während Molekül 2 jeweils gleich unscharf detektiert wird, weil es sich offensichtlich zwischen E1 und E2 befindet.

Aus der Größe der Moleküle auf den Detektorabschnitten kann also auf ihre genaue Lage in Z-Richtung in der Probe geschlossen werden.

In der Zeichnung angedeutet sind weiterhin die Strahlengänge zweier Moleküle, die sich beide in Objektebene E2 befinden.

Die Blende B definiert den auf die Hälfte reduzierten Bildausschnitt (entsprechend der Größe der Sensorhälften S1 und S2) und verhindert, dass Licht von außerhalb dieses Bereiches auf die beiden Teilstrahlengänge überspricht.

Die Aufspaltung in zwei Teilbilder erfolgt am 50/50 Strahlteilerwürfel BS.

Die Aufgabe, das umgelenkte Teilbild in eine vom direkt abgebildeten Teilbild unterschiedliche Bildebene zu fokussieren, wird durch das Prisma P1 erfüllt. Dieses Prisma P1 verlängert die Schnittweite der entsprechenden Bündel verglichen mit dem entsprechenden Weg in Luft; es ist daher vorzugsweise aus einem hochbrechenden Glas auszuführen, um einen möglichst großen Arbeitsbereich zu erhalten. Diese Bündel werden über das Prisma P2 wieder parallel zum direkten Strahlengang eingespiegelt und auf den Bildsensor DE im Abschnitt S1 gelenkt.

Mit der Schnittweitenverlängerung nach der letzen Optik/Linse L2 im Prisma P1 kann durch Wahl der Länge des Prismas dafür gesorgt werden, dass trotz zwangsläufig größerer Weglänge des umgelenkten Teilbildes beide Teilbilder aus unterschiedlichen Objektebenen E1, E2 gleichzeitig scharf auf den Detektor DE abgebildet werden.

Durch Verfahren des Prismas P1 senkrecht zur optischen Achse des direkten Strahlengangs kann die z-Verschiebung der Fokusebenen der beiden Teilbilder aus unterschiedlichen Objektebenen) in der Probe eingestellt werden.

So kann die Aufspaltung beispielsweise vorteilhaft an unterschiedliche Objektive angepasst werden.

Dies ist nun auch ohne Nachfokussieren des Systems möglich, da das System so ausgelegt wurde, dass sich eine Verschiebung von "Null" einstellen lässt und sich insbesondere bei Beobachtung an der Deckglasoberfläche die zweite Fokusebene in die Probe (und nicht in das Deckglas) bewegen lässt.

In einer weiteren Anordnung, bei der man auf den Glasweg des Prismas P1 verzichtet und nur zwei gemeinsam senkrecht zur optischen Achse verfahrbare Umlenkspiegel benutzt, würde man auch vorteilhaft zwei unterschiedliche Objektebenen scharf auf die Kamera abbilden können. Allerdings würde man aufgrund des seitlichen Weges den Nullabgleich nicht schaffen und beim seitlichen Wegfahren der Spiegel immer weiter ins "Deckglas" fahren. Zur Variation der zweiten Objektebene im Probenraum müsste man dann die Objektebenenaufspaltung über die Spiegel einstellen und dann objektivseitig so Nachfokussieren, dass das Deckglas wieder scharf über die Umlenkung auf den Detektor abgebildet wird. Aber diese geschilderte Anordnung liegt dennoch im Rahmen der hier offenbarten Erfindung.

Eine Auswechslung des Prismas P1 gegen ein anderes Prisma mit unterschiedlichen Glaswegen ist möglich.

Die Abbildung vom Objekt auf den Detektor durch Linse L2 in Verbindung mit der Optik L1 links vom Strahlteiler Dic 2 ist insgesamt vorteilhaft telezentrisch.

Eine einstellbare, vorzugsweise rechteckige Blende B in einem Zwischenbild dient zur Definition eines rechteckigen und über P1, P2 aufgespalteten Bildbereichs und zur Unterdrückung von Fluoreszenz- und Streulicht aus den Feldbereichen außerhalb dieses neuen Bereichs.

Für Mehrfarbexperimente kann eine zweite Emissionswellenlänge über den Farbteiler Dic 2 ausgespiegelt werden und unter Verwendung eines zweiten, vorzugsweise identischen z-Aufspaltungsmoduls und eines weiteren Detektors kann dieser Strahlengang ebenfalls zur hochaufgelösten Lokalisierung verwendet werden.

Eventuelle Farblängsfehler des Objektivs O oder andere chromatische Fehler, die einen Einfluss auf die z-Lokalisierung der einzelnen Moleküle haben, können durch Anpassen der Aufspaltung für den zweiten Farbkanal kompensiert werden.

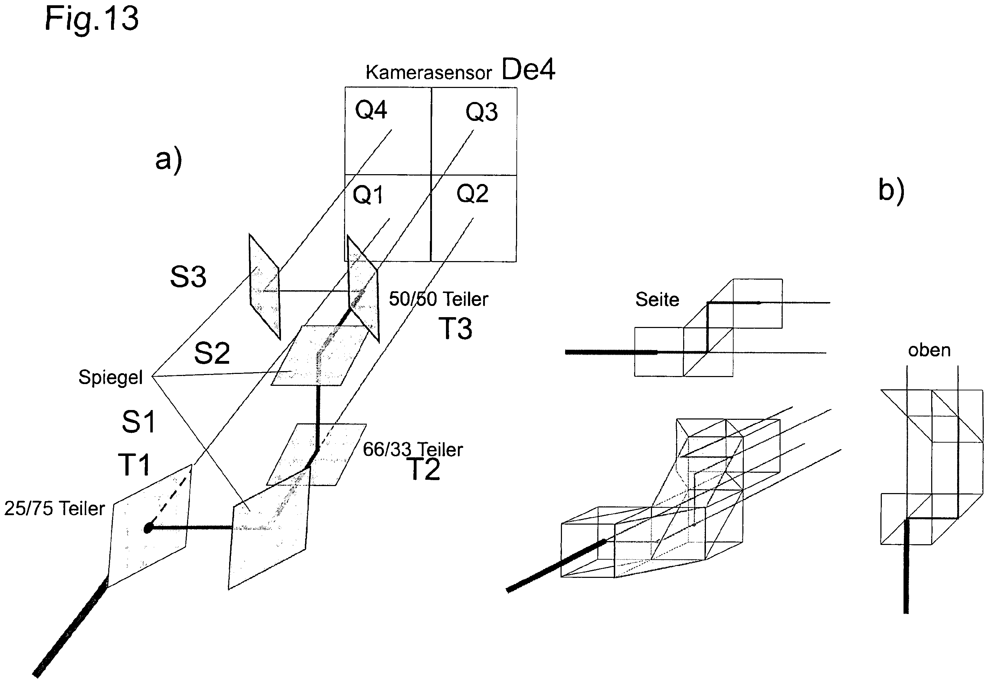

Fig. 13a) zeigt eine weitere vorteilhafte Ausbildung eines Moduls zur Aufspaltung eines Kamerabildes in 4 Teilbilder gleicher Intensität zur z-Hochauflösung.

In Fig. 13 a) links ist eine Ausführung mit separaten Spiegeln und Strahlteilern dargestellt. Ein erster Teiler T1, hier 25/75 Teilung bezüglich Transmission und Reflektion lenkt einen Teil des Lichtes auf die Fläche Q1 des Detektors De4.

Ein zweiter Teil wird durch T1 reflektiert und über einen Spiegel S1 in Richtung eines zweiten Teilers T2 gelenkt mit einem Verhältnis 66/33. Dieser lässt einen Teil des Lichtes in Richtung der Fläche Q2 von De4 durch und reflektiert einen Teil in Richtung eines Spiegels S3, der das Licht in Richtung des 50/50 Teilers T3 umlenkt. Ein Teil gelangt durch T3 auf die Fläche Q3 von De4 und ein Teil wird über S3 in Richtung der Fläche Q4 von De4 umgelenkt.

Durch die Aufspaltung der z-Ebenen in der monolithischen Bauform um jeweils eine "Würfellänge" eines Strahlteilerwürfels ergeben sich vier gleichmäßig verschobene Bild- bzw. Objektebenen, wobei der Quadrant Q1 von De4 das Bild im direkten Durchgang sieht, Quadrant Q2 ein um eine "Normdistanz" (= eine Strahlteilerwürfellänge im monolithischen Aufbau rechts), Quadrant Q3 um zwei und Quadrant Q4 ein um 3 Distanzen verschobenes Bild.

Die hier ohne Einschränkung dargestellten Teilerverhältnisse der 3 Strahlteiler sorgen dafür, dass alle 4 Quadranten vorzugsweise die gleiche Intensität erfassen.

In Fig. 13 b) ist eine monolithische Ausführung mit 3 Strahlteilerwürfeln für T1-T3 und 3 verspiegelten Prismen für S1-S3 von der Seite, von oben und perspektivisch dargestellt.

Die Anordnung in Fig. 13a) und b) ist vorteilhaft auch geeignet für einen telezentrischen Detektionsstrahlengang wie anhand von Fig. 12 beschrieben.

Die Vorteile der erfindungsgemäßen Anordnung in Fig. 13 bestehen insbesondere auch darin, dass durch vier Bilder aus vier Probenebenen vorteilhaft vier Stützstellen für die z-Bestimmung vorliegen, dadurch ist genauere z-Bestimmung in einem größeren Arbeitsbereich möglich.

Das quadratische Sensorformat der hochempfindlichen EMCCD-Kameras wird weiterhin noch effizienter ausgenutzt.

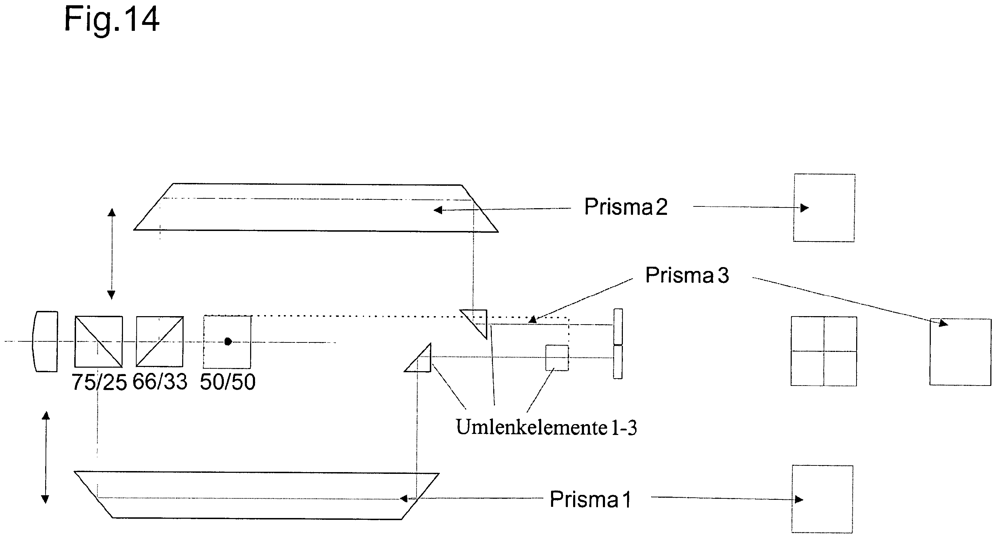

In Fig. 14 erfolgt eine vorteilhafte Kombination einer Ausführung nach Fig. 13 mit verschiebbaren Prismen entsprechend Fig. 12.

Rechts ist eine Ansicht aus Sensorrichtung dargestellt, links eine Draufsicht.

Anstelle der Spiegel S1-S3 in Fig. 14 sind hier Prismen 1-3 vorgesehen, die einen Lichtweg parallel zur optischen Achse durch ein Medium höherer optischer Dichte definieren. Im Vergleich zu Fig. 13 dienen hier zusätzliche Umlenkelemente 1-3 zur Wiedereinspiegelung in den jeweiligen Teilstrahlengang.

Jede der drei senkrecht zur optischen Achse (Lichtrichtung) verstellbaren Prismen 1-3 ist für jeweils einen Quadranten Q2-4 des Sensors De4 (Fig. 13) vorgesehen, der vierte Quadrant Q1 wird durch den direkten Durchgang belichtet. Jedes Prisma könnte jetzt auf eine unterschiedliche Ebenenverlagerung eingestellt werden.

## Patentansprüche

1. Hochauflösendes Mikroskop zur zwei - oder dreidimensionalen Positionsbestimmung von Objekten einer Probe (Pr) zur räumlich hochauflösenden Fluoreszenzmikroskopie der Probe (Pr), die mit Markierungsmolekülen markiert ist, welche mit einem Signal derart aktivierbar oder umschaltbar sind, dass sie erst im aktivierten oder umgeschalteten Zustand zur Abgabe von Fluoreszenzstrahlung anregbar sind, umfassend:
- einen ersten Laser (L1) zum Aktivieren oder Umschalten der Markierungsmoleküle, wobei der als Aktivier- oder Umschaltquelle dienende erste Laser (L1) ein Kurzpulslaser zur Aktivierung oder zum Umschalten mittels eines 2-Photonen Absorptionsprozesses ist;
wobei
- dem ersten Laser (L1) ein Scanmodul (S) in Beleuchtungsrichtung nachgeordnet ist, das als ein Punktscanner oder als ein Linienscanner ausgeführt ist,
- wobei das Scanmodul (S) als Mittel zur selektiven Aktivierung oder Umschaltung von Probenregionen vorgesehen ist; und
- wobei das Mikroskop Mittel aufweist, wodurch das Einbringen des Signals unter Verwendung des Scanmoduls (S) auf die Probe (Pr) derart erfolgt, dass nur eine Teilmenge der in der Probe (Pr) vorhandenen Markierungsmoleküle aktiviert wird, wobei in der Probe (Pr) Teilbereiche bestehen, in denen aktivierte Markierungsmoleküle zu den ihnen nächst benachbarten aktivierten Markierungsmoleküle mindestens einen Abstand haben, der größer oder gleich einer Länge ist, welche sich aus einer vorbestimmten optischen Auflösung ergibt,
- zwei Laser (L2, L3), in verschiedenen Wellenlängen, zur Fluoreszenzanregung von aktivierten Markierungsmolekülen als eine Weitfeldbeleuchtung;
- und eine Mehrebenendetektion in Z-Richtung erfolgt, indem im Abbildungsstrahlengang ein Flächenempfänger (K1) zur Detektion der Fluoreszenzstrahlung mit der vorbestimmten optischen Auflösung im Weitfeld vorhanden ist, so dass aus der aufgenommenen Fluoreszenzstrahlung ein Einzelbild erzeugbar ist, und entweder
- eine anamorphotische Optik in Form einer Zylinderlinse (ZL) angeordnet ist, die eine astigmatische Punktbildverwaschungsfunktion (PSF) bewirkt und ein Bild des Ortes der Fluoreszenzstrahlung elliptisch verzerrt wird, wenn sich der abgebildete Ort der Fluoreszenzstrahlung oberhalb beziehungsweise unterhalb des Symmetriepunkts der PSF befindet, wobei anhand einer Orientierung und Stärke der Verzerrung eine Information über die Position des Ortes in Z-Richtung extrahierbar ist;
- oder mindestens ein Bildteiler (Bt1) mit einem Strahlteiler zur Aufspaltung des Detektionsstrahlengangs in mindestens zwei Teilstrahlengänge vorgesehen ist, durch dessen Wirkung ein erfasstes Bild in zwei Teilbilder aufgespalten wird, die in der Detektionsebene zueinander einen räumlichen Versatz aufweisen und nebeneinander auf den Flächenempfänger (K1) abgebildet sind,
- wobei das Mikroskop dazu eingerichtet ist, die geometrischen Orte der Fluoreszenzstrahlung abgebenden Markierungsmoleküle mit einer über die vorbestimmte optische Auflösung gesteigerten Ortsauflösung zu ermitteln, die Schritte des Aktivierens oder Umschaltens sowie ein Anregen und Detektieren mehrfach zu wiederholen und die so erhaltenen mehreren Einzelbilder zu einem Gesamtbild zusammenzufügen.

2. Hochauflösendes Mikroskop zur zwei - oder dreidimensionalen Positionsbestimmung von Objekten einer Probe (Pr) zur räumlich hochauflösenden Fluoreszenzmikroskopie der Probe (Pr), die mit Markierungsmolekülen markiert ist, welche mit einem Signal derart aktivierbar oder umschaltbar sind, dass sie erst im aktivierten oder umgeschalteten Zustand zur Abgabe von Fluoreszenzstrahlung anregbar sind, umfassend:
- einen ersten Laser (L1) zum Aktivieren oder Umschalten der Markierungsmoleküle, wobei der als Aktivier- oder Umschaltquelle dienende erste Laser (L1) ein Kurzpulslaser zur Aktivierung oder zum Umschalten mittels eines 2-Photonen Absorptionsprozesses ist;
wobei
- eine Weitfeldbeleuchtung unter Verwendung eines Gitters (G) zum Aktivieren oder Umschalten mit dem Laser (L1) vorgesehen ist, wobei das Gitter (G) in einem aufgeweiteten Strahl des Kurzpulslasers (L1) vorhanden ist und bei einer Beleuchtung mittels des Kurzpulslasers (L1) ein beleuchteter Bereich des Gitters (G) in die Probe (Pr) abgebildet ist, wobei das Gitter (G) spektrale Anteile der Laserpulse des Kurzpulslasers (L1) aufspaltet und in einem teleskopischen Strahlengang aufgespaltete Strahlungsanteile in der Bildebene des Teleskops oder in der Probe (Pr) vereinigt werden, so dass die ursprüngliche Pulsform im Fokus der Abbildung des Gitters (G) erreicht ist, wobei in einem Zwischenbild entweder ein räumlicher Lichtmodulator SLM oder ein DMD-array (Digital Micromirror Device Array) angeordnet ist;
- wobei der räumliche Lichtmodulator (SLM) oder das DMD-array als Mittel zur selektiven Aktivierung oder Umschaltung von Probenregionen vorgesehen sind; und
- wobei das Mikroskop Mittel aufweist, wodurch das Einbringen des Signals unter Verwendung des Gitters (G) auf die Probe (Pr) derart erfolgt, dass nur eine Teilmenge der in der Probe (Pr) vorhandenen Markierungsmoleküle aktiviert wird, wobei in der Probe (Pr) Teilbereiche bestehen, in denen aktivierte Markierungsmoleküle zu den ihnen nächst benachbarten aktivierten Markierungsmoleküle mindestens einen Abstand haben, der größer oder gleich einer Länge ist, welche sich aus einer vorbestimmten optischen Auflösung ergibt,
- zwei Laser (L2, L3), in verschiedenen Wellenlängen, zur Fluoreszenzanregung von aktivierten Markierungsmolekülen als eine Weitfeldbeleuchtung;
- und eine Mehrebenendetektion in Z-Richtung erfolgt, indem im Abbildungsstrahlengang ein Flächenempfänger (K1) zur Detektion der Fluoreszenzstrahlung mit der vorbestimmten optischen Auflösung im Weitfeld vorhanden ist, so dass aus der aufgenommenen Fluoreszenzstrahlung ein Einzelbild erzeugbar ist, und entweder
- eine anamorphotische Optik in Form einer Zylinderlinse (ZL) angeordnet ist, die eine astigmatische Punktbildverwaschungsfunktion (PSF) bewirkt und ein Bild des Ortes der Fluoreszenzstrahlung elliptisch verzerrt wird, wenn sich der abgebildete Ort der Fluoreszenzstrahlung oberhalb beziehungsweise unterhalb des Symmetriepunkts der PSF befindet, wobei anhand einer Orientierung und Stärke der Verzerrung eine Information über die Position des Ortes in Z-Richtung extrahierbar ist;
- oder mindestens ein Bildteiler (Bt1) mit einem Strahlteiler zur Aufspaltung des Detektionsstrahlengangs in mindestens zwei Teilstrahlengänge vorgesehen ist, durch dessen Wirkung ein erfasstes Bild in zwei Teilbilder aufgespalten wird, die in der Detektionsebene zueinander einen räumlichen Versatz aufweisen und nebeneinander auf den Flächenempfänger (K1) abgebildet sind,
- wobei das Mikroskop dazu eingerichtet ist, die geometrischen Orte der Fluoreszenzstrahlung abgebenden Markierungsmoleküle mit einer über die vorbestimmte optische Auflösung gesteigerten Ortsauflösung zu ermitteln, die Schritte des Aktivierens oder Umschaltens sowie ein Anregen und Detektieren mehrfach zu wiederholen und die so erhaltenen mehreren Einzelbilder zu einem Gesamtbild zusammenzufügen.

## Claims

1. High-resolution microscope for two-dimensional or three-dimensional position determination of objects of a sample (Pr) for spatial high-resolution fluorescence microscopy of the sample (Pr), which is marked with marking molecules which are activatable or switchable using a signal in a manner such that they are excitable to emit fluorescence radiation only in the activated or switched state, comprising:
- a first laser (L1) for activating or switching the marking molecules, wherein the first laser (L1), which serves as an activation or switching source, is a short-pulse laser for activating or for switching by means of a 2-photon absorption process;
wherein
- arranged in the illumination direction downstream of the first laser (L1) is a scanning module (S), which is designed as a point scanner or as a line scanner,
- wherein the scanning module (S) is provided as a means for selectively activating or switching sample regions; and
- wherein the microscope has means which are used to introduce the signal onto the sample (Pr) by using the scanning module (S) in a manner such that only a subset of the marking molecules present in the sample (Pr) is activated,
wherein in the sample (Pr) partial regions exist in which activated marking molecules have at least a distance from the activated marking modules which are their closest neighbours that is greater than or equal to a length which results from a predetermined optical resolution,
- two lasers (L2, L3), of different wavelengths, for fluorescence excitation of activated marking molecules as widefield illumination;
- and a multi-plane detection in the Z-direction is carried out by virtue of the fact that in the imaging beam path a surface receiver (Kl) for detecting the fluorescence radiation with the predetermined optical resolution is present in the widefield such that an individual image is generable from the recorded fluorescence radiation, and either
- an anamorphic optical unit in the form of a cylindrical lens (ZL) is arranged which brings about an astigmatic point spread function (PSF) and an image of the location of the fluorescence radiation is elliptically distorted if the imaged location of the fluorescence radiation is above or below the point of symmetry of the PSF, wherein on the basis of an orientation and degree of the distortion a piece of information about the position of the location in the Z-direction is extractable;
- or at least one image splitter (Bt1) with a beam splitter for splitting the detection beam path into at least two partial beam paths is provided, whose effect causes a recorded image to be split into two partial images which have a spatial offset relative to one another in the detection plane and are imaged next to one another on the surface receiver (Kl),
- wherein the microscope is configured to ascertain the geometric locations of the marking molecules emitting fluorescence radiation with a spatial resolution which goes beyond the predetermined optical resolution, to repeat the steps of activation or switching and excitation and detecting several times and to stitch together the plurality of individual images thus obtained into one overall image.

2. High-resolution microscope for two-dimensional or three-dimensional position determination of objects of a sample (Pr) for spatial high-resolution fluorescence microscopy of the sample (Pr), which is marked with marking molecules which are activatable or switchable with a signal in a manner such that they are excitable to emit fluorescence radiation only in their activated or switched state, comprising:
- a first laser (L1) for activating or switching the marking molecules, wherein the first laser (L1), which serves as an activation or switching source, is a short-pulse laser for activating or for switching by means of a 2-photon absorption process;
wherein
- widefield illumination is provided using a grating (G) for activating or switching with the laser (L1), wherein the grating (G) is present in an expanded beam of the short-pulse laser (L1) and an illuminated region of the grating (G) is imaged into the sample (Pr) under illumination by means of the short-pulse laser (L1), wherein the grating (G) splits spectral components of the laser pulses from the short-pulse laser (L1) and radiation components split in a telescopic beam path are combined in the image plane of the telescope or in the sample (Pr) such that the original pulse shape is achieved in the focus of the image representation of the grating (G),wherein in an intermediate image either a spatial light modulator (SLM) or a DMD array (digital micromirror device array) is arranged;
- wherein the spatial light modulator (SLM) or the DMD array are provided as means for selectively activating or switching sample regions; and
- wherein the microscope has means which cause the introduction of the signal onto the sample (Pr) using the grating (G) in a manner such that only a subset of the marking molecules present in the sample (Pr) are activated, wherein partial regions exist in the sample (Pr) in which activated marking molecules have at least a distance from the activated marking molecules which are their closest neighbours which is greater than or equal to a length which results from a predetermined optical resolution,
- two lasers (L2, L3), of different wavelengths, for fluorescence excitation of activated marking molecules as widefield illumination;
- and multi-plane detection in the Z-direction is carried out by virtue of the fact that in the imaging beam path a surface receiver (Kl) for detecting the fluorescence radiation with the predetermined optical resolution in the wide field is present so that an individual image is generable from the recorded fluorescence radiation, and either
- an anamorphic optical unit in the form of a cylindrical lens (ZL) is arranged which brings about an astigmatic point spread function (PSF), and an image of the location of the fluorescence radiation is elliptically distorted if the imaged location of the fluorescence radiation is above or below the point of symmetry of the PSF, wherein using an orientation and degree of the distortion a piece of information about the position of the location in the Z-direction is extractable;
- or at least one image splitter (Bt1) with a beam splitter for splitting the detection beam path into at least two partial beam paths is provided whose effect causes a recorded image to be split into two partial images which have a spatial offset relative to one another in the detection plane and are imaged next to one another onto the surface receiver (Kl),
- wherein the microscope is configured to ascertain the geometric locations of the marking molecules emitting fluorescence radiation with a spatial resolution that goes beyond the predetermined optical resolution, the steps of activating or switching and of exciting and detecting are repeated several times and the plurality of individual images thus obtained are stitched together into an overall image.

## Revendications

1. Microscope à haute résolution permettant la détermination de position bi- ou tridimensionnelle d'objets d'un échantillon (Pr) pour la microscopie à fluorescence à haute résolution spatiale de l'échantillon (Pr), qui est marqué par des molécules de marquage, lesquelles peuvent être activées ou commutées à l'aide d'un signal de telle sorte qu'elles ne puissent être excitées pour émettre un rayonnement de fluorescence qu'à l'état activé ou commuté, comprenant :
- un premier laser (L1) destiné à activer ou commuter les molécules de marquage, le premier laser (L1) qui sert de source d'activation ou de commutation étant un laser à impulsions courtes permettant l'activation ou la commutation au moyen d'un processus d'absorption biphotonique ;
dans lequel
- un module de balayage (S) est disposé en aval du premier laser (L1) dans la direction d'éclairage, lequel est réalisé sous la forme d'un scanner point par point ou d'un scanner linéaire,
- le module de balayage (S) étant prévu en tant que moyen d'activation ou de commutation sélective de régions d'échantillons ; et
- le microscope comportant des moyens à l'aide desquels l'injection du signal par utilisation du module de balayage (S) sur l'échantillon (Pr) est effectuée de telle sorte que seul un sous-ensemble des molécules de marquage présentes dans l'échantillon (Pr) soit activé, des zones partielles étant présentes dans l'échantillon (Pr), dans lesquelles des molécules de marquage activées présentent, par rapport aux molécules de marquage activées qui leur sont immédiatement adjacentes, au moins une distance qui est supérieure ou égale à une longueur qui résulte d'une résolution optique prédéterminée,
- deux lasers (L2, L3), à différentes longueurs d'onde, destinés à exciter la fluorescence de molécules de marquage activées sous la forme d'un éclairage grand champ ;
- et une détection multiplan est effectuée dans la direction Z, en faisant en sorte qu'un récepteur surfacique (Kl) soit présent dans le trajet de faisceau d'imagerie pour détecter le rayonnement de fluorescence avec la résolution optique grand champ prédéterminée, de telle sorte qu'une image individuelle puisse être générée à partir du rayonnement de fluorescence acquis, et soit
- une optique anamorphique est disposée sous la forme d'une lentille cylindrique (ZL), qui provoque une fonction d'étalement d'image ponctuelle (PSF) astigmatique, et une image du lieu du rayonnement de fluorescence est distordue de manière elliptique lorsque le lieu reproduit du rayonnement de fluorescence se trouve respectivement au-dessus et au-dessous du point de symétrie de la PSF, une information concernant la position du lieu dans la direction Z pouvant être extraite sur la base d'une orientation et d'une intensité de la distorsion ;
- soit il est prévu au moins un diviseur d'image (Bt1) comprenant un diviseur de faisceau destiné à diviser le trajet de faisceau de détection en au moins deux trajets de faisceau partiels, lequel a pour effet de diviser une image détectée en deux images partielles qui présentent un décalage spatial l'une par rapport à l'autre dans le plan de détection et sont reproduites côte à côte sur le récepteur surfacique (Kl),
- le microscope étant conçu pour déterminer les lieux géométriques des molécules de marquage émettant un rayonnement de fluorescence avec une résolution spatiale accrue au-delà de la résolution optique prédéterminée, pour répéter plusieurs fois les étapes d'activation ou de commutation ainsi qu'une excitation et une détection et pour assembler les multiples images individuelles ainsi obtenues en une image globale.

2. Microscope à haute résolution permettant la détermination de position bi- ou tridimensionnelle d'objets d'un échantillon (Pr) pour la microscopie à fluorescence à haute résolution spatiale de l'échantillon (Pr), qui est marqué par des molécules de marquage, lesquelles peuvent être activées ou commutées à l'aide d'un signal de telle sorte qu'elles ne puissent être excitées pour émettre un rayonnement de fluorescence qu'à l'état activé ou commuté, comprenant :
- un premier laser (L1) destiné à activer ou commuter les molécules de marquage, le premier laser (L1) qui sert de source d'activation ou de commutation étant un laser à impulsions courtes permettant l'activation ou la commutation au moyen d'un processus d'absorption biphotonique ;
dans lequel
- un éclairage grand champ est prévu par utilisation d'un réseau (G) permettant l'activation ou la commutation au moyen du laser (Ll), le réseau (G) étant présent dans un faisceau élargi du laser à impulsions courtes (L1) et, lors d'un éclairage au moyen du laser à impulsions courtes (Ll), une image d'une zone éclairée du réseau (G) est formée dans l'échantillon (Pr), le réseau (G) divisant des parties spectrales des impulsions laser du laser à impulsions courtes (L1) et des parties de rayonnement divisées dans un trajet de faisceau télescopique étant réunies dans le plan image du télescope ou dans l'échantillon (Pr), de telle sorte que la forme d'impulsion initiale soit atteinte au foyer de formation d'image du réseau (G), un modulateur spatial de lumière SLM ou une matrice DMD (Digital Micromirror Device Array) étant disposé dans une image intermédiaire ;
- le modulateur spatial de lumière (SLM) ou la matrice DMD étant prévu en tant que moyen d'activation ou de commutation sélective de régions d'échantillons ; et
- le microscope comportant des moyens à l'aide desquels l'injection du signal par utilisation du réseau (G) sur l'échantillon (Pr) est effectuée de telle sorte que seul un sous-ensemble des molécules de marquage présentes dans l'échantillon (Pr) soit activé,
des zones partielles étant présentes dans l'échantillon (Pr), dans lesquelles des molécules de marquage activées présentent, par rapport aux molécules de marquage activées qui leur sont immédiatement adjacentes, au moins une distance qui est supérieure ou égale à une longueur qui résulte d'une résolution optique prédéterminée,
- deux lasers (L2, L3), à différentes longueurs d'onde, destinés à exciter la fluorescence de molécules de marquage activées sous la forme d'un éclairage grand champ ;
- et une détection multiplan est effectuée dans la direction Z, en faisant en sorte qu'un récepteur surfacique (Kl) soit présent dans le trajet de faisceau d'imagerie pour détecter le rayonnement de fluorescence avec la résolution optique grand champ prédéterminée, de telle sorte qu'une image individuelle puisse être générée à partir du rayonnement de fluorescence acquis, et soit
- une optique anamorphique est disposée sous la forme d'une lentille cylindrique (ZL), qui provoque une fonction d'étalement d'image ponctuelle (PSF) astigmatique, et une image du lieu du rayonnement de fluorescence est distordue de manière elliptique lorsque le lieu reproduit du rayonnement de fluorescence se trouve respectivement au-dessus et au-dessous du point de symétrie de la PSF, une information concernant la position du lieu dans la direction Z pouvant être extraite sur la base d'une orientation et d'une intensité de la distorsion ;
- soit il est prévu au moins un diviseur d'image (Bt1) comprenant un diviseur de faisceau destiné à diviser le trajet de faisceau de détection en au moins deux trajets de faisceau partiels, lequel a pour effet de diviser une image détectée en deux images partielles qui présentent un décalage spatial l'une par rapport à l'autre dans le plan de détection et sont reproduites côte à côte sur le récepteur surfacique (Kl),
- le microscope étant conçu pour déterminer les lieux géométriques des molécules de marquage émettant un rayonnement de fluorescence avec une résolution spatiale accrue au-delà de la résolution optique prédéterminée, pour répéter plusieurs fois les étapes d'activation ou de commutation ainsi qu'une excitation et une détection et pour assembler les multiples images individuelles ainsi obtenues en une image globale.
